# EUROPEAN PATENT SPECIFICATION

(11) **EP 4 390 345 B1**
(45) Date of publication and mention of the grant of the patent: **30.07.2025**
(21) Application number: 23209894.7
(22) Date of filing: 14.11.2023
(51) Int. Cl.: G02B 5/10, G01J 5/00, G01J 5/0801, G01J 5/08, G01J 5/53, G01J 5/0806, G02B 17/08, G02B 5/20, G02B 19/00, G02B 27/10, G02B 27/12

(54) **SENSOR WITH AN OMNIDIRECTIONAL FIELD OF VIEW**
SENSOR MIT EINEM OMNIDIREKTIONALEN SICHTFELD
CAPTEUR À CHAMP DE VISION OMNIDIRECTIONNEL

(30) Priority: 19.12.2022 IN 202211073547
(43) Date of publication of application: 26.06.2024
(73) Proprietor: Life Safety Distribution GmbH, 1180 Rolle (CH)
(72) Inventor: TRIPATHY, Janmejaya, Charlotte, 28202 (US); KULKARNI, Sumit Suresh, Charlotte, 28202 (US); R, Ranjith Narayanan, Charlotte, 28202 (US)
(74) Representative: Haseltine Lake Kempner LLP

(56) References cited:
- CN-A- 106 646 840
- US-A1- 2022 074 792
- US-B2- 9 355 542

## Description

### BACKGROUND

Sensors detect and/or sense a presence of various conditions in the environment where they are located. For example, sensors may detect presence of fire in the environment, detect motion in the environment, detect proximity of an object, determine distance to one or more objects, determine a point cloud representation of the objects in the environment, etc. In general, sensors receive signal(s) from the environment, such as visible and/or invisible optical beams, etc, in order to perform the detection and/or sensing.

A sensor may have a limited Field of View (FoV) for receiving signal(s), which may limit its detection and or sensing capability. Applicant has identified technical challenges and difficulties associated with the FoV in sensors. Through applied effort, ingenuity, and innovation, Applicant has solved problems related to address the limitation of the FoV in sensors by developing solutions embodied in the present disclosure, which are described in detail below.

Prior art is disclosed in US2022/074792 A1 and CN106646840 A.

### BRIEF SUMMARY

Various embodiments described herein relate to methods, apparatuses, and systems for sensing.

Various embodiments of the present disclosure provide a sensor comprising an omnidirectional reflector comprising a reflecting side configured to collect one or more incoming beams from a 360-degree first field of view and a 180-degree or less second field of view, and concentrate the collected one or more incoming beams using a curvature of the reflecting side. The sensor may comprise a calibration source located inside the omnidirectional reflector and configured to generate one or more calibration beams, a first filter configured to filter one or more first beams comprising any of a first portion of the collected and concentrated one or more incoming beams and a first portion of the calibration beams, and a first detector configured to detect the filtered one or more first beams.

**In** various embodiments the sensor comprises a second filter configured to filter one or more second beams comprising any of a second portion of the collected and concentrated one or more incoming beams and a second portion of the calibration beams, a second detector configured to detect the filtered one or more second beams, and a beam splitter configured to split the collected and concentrated one or more incoming beams to the first and second portions of the collected and concentrated one or more incoming beams, and split the calibration beams to the first and second portion of the calibration beams.

In various embodiments, the beam splitter is any of a micro prism beam splitter, a plate beam splitter, or a dichroic beam splitter. In various embodiments the omnidirectional reflector comprising an opening configured to pass the one or more calibration beams from the calibration source to the beam splitter.

In various embodiments, the sensor comprises a concentrating lens placed at the opening of the omnidirectional reflector, the concentrating lens configured to concentrate the one or more calibration beams on the beam splitter. In various embodiments, the one or more calibration beams comprise characteristics of an incoming beam of interest, the characteristics comprising any of bandwidth, amplitude, intensity, power, energy.

Various embodiments of the present disclosure provide a sensor comprising an omnidirectional reflector comprising a reflecting side configured to collect one or more incoming beams from a 360-degree first field of view and a 180-degree or less second field of view, and concentrate the collected beams using a curvature of the reflecting side. In various embodiments, the sensor comprises a first dichroic beam splitter located outside the omnidirectional reflector and configured to split the collected and concentrated one or more incoming beams to first and second portions of the collected and concentrated one or more incoming beams, a first calibration source located on the first dichroic beam splitter and configured to generate one or more first calibration beams, a first filter configured to filter one or more first beams comprising any of the first portion of the collected and concentrated one or more incoming beams and the one or more first calibration beams, and a first detector configured to detect the filtered one or more first beams.

In various embodiments, the sensor comprises a second calibration source located on the first dichroic beam splitter on an opposite side of the first calibration source, the second calibration source configured to generate one or more second calibration beams, and a beam splitter configured to split the second portion of the collected and concentrated one or more incoming beams to a third and fourth portions of the collected and concentrated one or more incoming beams, and split the one or more second calibration beams to a first and second portion of the one or more second calibration beams.

In various embodiments, the sensor comprises a second filter configured to filter one or more second beams comprising any of the third portion of the collected and concentrated one or more incoming beams and the first portion of the one or more second calibration beams, a second detector configured to detect the filtered one or more second beams, a third filter configured to filter one or more third beams comprising any of the fourth portion of the collected and concentrated one or more incoming beams and the second portion of the one or more second calibration beams, and a third detector configured to detect the filtered one or more third beams.

In various embodiments, the sensor comprises a calibration light holder configured to hold the first and second calibration lights at a center of the first dichroic beam splitter. In various embodiments, the sensor comprises a first filter or detector holder configured to hold any of the first filter and first detector, and one or more electrical connectors disposed on the first dichroic beam splitter, the one or more electrical connectors electronically coupled to any of the first and second calibration sources, wherein the one or more electrical connectors are disposed in a shadow of the holder with respect to the collected and concentrated one or more incoming beams.

Various embodiments of the present disclosure provide a sensor comprising an omnidirectional reflector comprising a reflecting side configured to collect one or more incoming beams from a 360-degree first field of view and a 180-degree or less second field of view, and concentrate the collected beams using a curvature of the reflecting side. In various embodiment, the sensor comprises a folding reflector configured to reflect the collected and concentrated one or more incoming beams, a first dichroic beam splitter located inside the omnidirectional reflector and configured to split the collected, concentrated, and reflected one or more incoming beams to first and second portions of the collected, concentrated, and reflected one or more incoming beams, a first calibration source located on the first dichroic beam splitter and configured to generate one or more first calibration beams, a first filter configured to filter one or more first beams comprising any of the first portion of the collected, concentrated, and reflected one or more incoming beams and the first calibration beams, and a first detector configured to detect the filtered one or more first beams.

In various embodiments, the sensor comprises a second calibration source located on the first the first dichroic beam splitter on an opposite side of the first calibration source, the second calibration source configured to generate one or more second calibration beams, a second filter configured to filter one or more second beams comprising any of the second portion of the collected, concentrated, and reflected one or more incoming beams and the second calibration beams, and a second detector configured to detect the filtered one or more second beams.

In various embodiments, the sensor comprises a second calibration source located on the first dichroic beam splitter on an opposite side of the first calibration source, the second calibration source configured to generate one or more second calibration beams, and a beam splitter configured to split the second portion of the collected, concentrated, and reflected one or more incoming beams to a third and fourth portions of the collected, concentrated, and reflected one or more incoming beams, and split the second calibration beams to a first and second portion of the one or more second calibration beams.

In various embodiments the sensor comprises a second filter configured to filter one or more second beams comprising any of the third portion of the collected, concentrated, and reflected one or more incoming beams and the first portion of the one or more second calibration beams, a second detector configured to detect the filtered one or more second beams, a third filter configured to filter one or more third beams comprising any of the fourth portion of the collected, concentrated, and reflected one or more incoming beams and the second portion of the one or more second calibration beams, and a third detector configured to detect the filtered one or more third beams.

In various embodiments, the sensor comprises a calibration light holder configured to hold the first and second calibration lights at a center of the first dichroic beam splitter, and one or more electrical connectors disposed on the first dichroic beam splitter, the one or more electrical connectors electronically coupled to any of the first and second calibration sources, wherein the one or more electrical connectors are disposed in a shadow of the holder with respect to the collected and concentrated one or more incoming beams. In various embodiments, the one or more first or second calibration beams comprise characteristics of an incoming beam of interest, the characteristics comprising any of bandwidth, amplitude, intensity, power, energy.

In various embodiments, the sensor comprises a processing circuitry electronically coupled to the first detector, the processing circuitry configured to process the detected filtered one or more first beams, a memory, electronically coupled to the processing circuitry, the memory configured to store a firmware comprising instructions for the processing circuitry to process the detected filtered one or more first beams. In various embodiments, the first detector is configured to detect one or more incoming optical communications beams collected by the omnidirectional reflector from the first and second fields of view, wherein the one or more incoming optical communications beams comprise data for updating the firmware.

Various embodiments of the present disclosure provide a sensor comprising an omnidirectional reflector comprising a reflecting side configured to collect one or more incoming beams from a 360-degree first field of view and a 180-degree or less second field of view, and concentrate the collected beams using a curvature of the reflecting side. In various embodiments, the sensor comprises a first dichroic beam splitter located inside the omnidirectional reflector and configured to split a collected, concentrated, and reflected by one or more incoming beams to first and second portions of the collected, concentrated, and reflected one or more incoming beams, and a second dichroic beam splitter configured to reflect a portion of the collected and concentrated one or more incoming beams to generate the collected, concentrated, and reflected one or more incoming beams and pass an imaging portion of the collected and concentrated one or more incoming beams.

In various embodiments, the sensor comprises a first calibration source located on the first dichroic beam splitter and configured to generate one or more first calibration beams, a first filter configured to filter one or more first beams comprising any of the first portion of the collected, concentrated, and reflected one or more incoming beams and the first calibration beams, a first detector configured to detect the filtered one or more first beams, a camera configured to receive the imaging portion of the collected and concentrated one or more incoming beams, and determine a location of the one or more incoming beams in the first or second fields of view.

In various embodiments, the sensor comprises a processing circuitry electronically coupled to the first detector, the processing circuitry configured to process the detected filtered one or more first beams, and a memory, electronically coupled to the processing circuitry, the memory configured to store a firmware comprising instructions for the processing circuitry to process the detected filtered one or more first beams. In various embodiments, the first detector is configured to detect one or more incoming optical communications beams collected by the omnidirectional reflector from the first and second fields of view, wherein the one or more incoming optical communications beams comprise data for updating the firmware.

Various embodiments of the present disclosure provide a sensor comprising an omnidirectional reflector comprising a reflecting side configured to collect one or more incoming beams from a 360-degree first field of view and a 180-degree or less second field of view, and concentrate the collected one or more incoming beams using a curvature of the reflecting side. In various embodiments, the sensor comprises an internal optical source located inside the omnidirectional reflector and configured to generate one or more internal optical beams, wherein the one or more internal optical beams comprising one or more outgoing optical communications beams and one or more calibration beams, a first filter configured to filter one or more first beams comprising any of a first portion of the collected and concentrated one or more incoming beams and a first portion of the calibration beams, and a first detector configured to detect the filtered one or more first beams. In various embodiments, the one or more outgoing optical communications beams comprise data representative of the detection of the filtered one or more first beams.

In various embodiments, the sensor comprises a convex beam splitter configured to split the one or more internal optical beams to the one or more outgoing optical communications beams and the one or more calibration beams, reflect the one or more outgoing optical communications beams to the omnidirectional reflector, wherein the omnidirectional reflector is configured to reflect the outgoing optical communications beams to outside of the sensor, and pass the one or more calibration beams to a beam splitter.

In various embodiments, the sensor comprises a second filter configured to filter one or more second beams comprising any of a second portion of the collected and concentrated one or more incoming beams and a second portion of the calibration beams, a second detector configured to detect the filtered one or more second beams, and a beam splitter configured to split the collected and concentrated one or more incoming beams to the first and second portions of the collected and concentrated one or more incoming beams, and split the calibration beams to the first and second portions of the calibration beams. In various embodiments, the internal optical source is electronically coupled to the first and second detectors, and the one or more calibration beams comprise data representative of the detection of the filtered one or more second beams.

In various embodiments, the sensor comprises an optical window configured to protect the sensor, wherein a reception of the one or more outgoing optical communications beams indicates an obstruction on the optical window.

The foregoing illustrative summary, as well as other exemplary objectives and/or advantages of the disclosure, and the manner in which the same are accomplished, are further explained in the following detailed description and its accompanying drawings.

### BRIEF DESCRIPTION OF THE DRAWINGS

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:
FIG. 1A illustrates an example schematic diagram depicting a sensor in accordance with various embodiments of the present disclosure;
FIG. 1B illustrates an example schematic diagram depicting a sensor in accordance with various embodiments of the present disclosure;
FIG. 2 illustrates an example schematic diagram depicting a sensor in accordance with various embodiments of the present disclosure;
FIG. 3 illustrates a diagram depicting spectral intensity of fire as used in accordance with various embodiments of the present disclosure;
FIG. 4A illustrates an example schematic diagram depicting a reflector in accordance with various embodiments of the present disclosure;
FIG. 4B illustrates an example schematic diagram depicting a reflector in accordance with various embodiments of the present disclosure;
FIG. 5 illustrates an example schematic diagram depicting a sensor in accordance with various embodiments of the present disclosure;
FIG. 6 illustrates an example schematic diagram depicting a sensor in accordance with various embodiments of the present disclosure;
FIG. 7 illustrates an example schematic diagram depicting a sensor in accordance with various embodiments of the present disclosure;
FIG. 8 illustrates an example schematic diagram depicting a sensor in accordance with various embodiments of the present disclosure;
FIG. 9A illustrates an example schematic diagram depicting a dichroic beam splitter in accordance with various embodiments of the present disclosure;
FIG. 9B illustrates an example schematic diagram depicting a dichroic beam splitter in accordance with various embodiments of the present disclosure;
FIG. 10 illustrates an example schematic diagram depicting calibration source(s) in accordance with various embodiments of the present disclosure;
FIG. 11 illustrates an example schematic diagram depicting a controller in accordance with various embodiments of the present disclosure;
FIG. 12 is a flowchart diagram illustrating example operations in accordance with various embodiments of the present disclosure;
FIG. 13 is a flowchart diagram illustrating example operations in accordance with various embodiments of the present disclosure;
FIG. 14 is a flowchart diagram illustrating example operations in accordance with various embodiments of the present disclosure;
FIG. 15 is a flowchart diagram illustrating example operations in accordance with various embodiments of the present disclosure;
FIG. 16 is a schematic diagram illustrating a sensor, in accordance with various embodiments of the present disclosure; and
FIG. 17 is a schematic diagram illustrating a convex beam splitter, in accordance with various embodiments of the present disclosure.

### DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

The components illustrated in the figures represent components that may or may not be present in various embodiments of the present disclosure described herein such that embodiments may include fewer or more components than those shown in the figures while not departing from the scope of the present disclosure. Some components/aspects may be omitted from one or more figures or shown in dashed line for visibility, clarity, and/or illustrative purposes.

The phrases "in an example embodiment," "some embodiments," "various embodiments," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such components or features may be optionally included in some embodiments, or may be excluded.

The terms "electronically coupled" or "in electronic communications with" in the present disclosure refer to two or more electrical elements (for example, but not limited to, a controller, filter, detector, camera, light source, an example processing circuitry, communication module, input/output module, memory) and/or electric circuit(s) being connected through wired means (for example but not limited to, conductive wires or traces) and/or wireless means (for example but not limited to, wireless network, electromagnetic field), such that data and/or information (for example, electronic indications, signals) may be transmitted to and/or received from the electrical elements and/or electric circuit(s) that are electronically coupled.

In various embodiments, the term "configured to" perform certain steps is used to convey that that a component performs the steps it is configured to perform when it receives and/or interact with the corresponding beam(s) or any other condition for performing the steps are met.

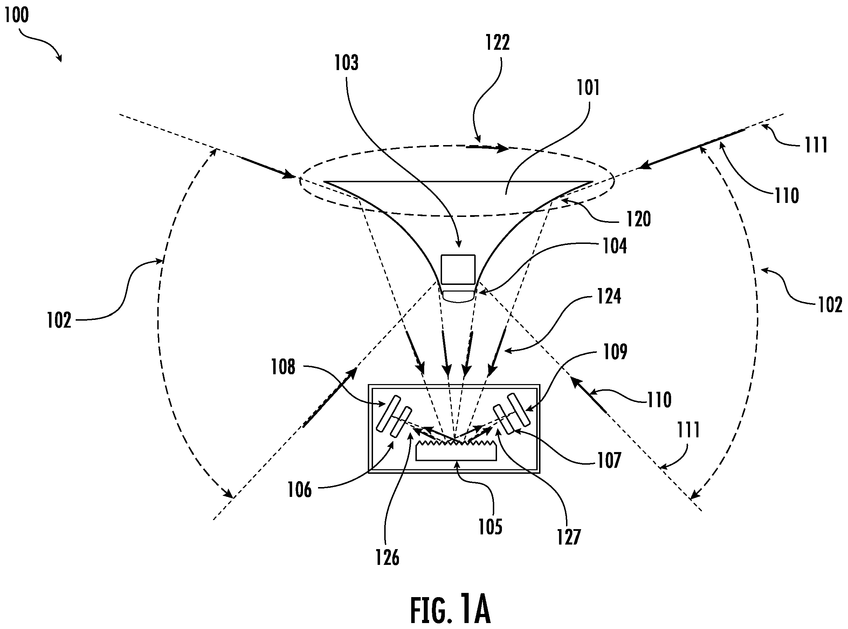

Referring now to FIG. 1A, a schematic diagram illustrating a sensor 100 is presented in accordance with various embodiments of the present disclosure. In various embodiments, the sensor 100 includes an omnidirectional reflector 101. The omnidirectional reflector 101 may include a reflecting side 120 configured to collect one or more incoming beams 110 from a 360-degree first field of view (FoV) 122 and a 180-degree or less second field of view (FoV) 102. For example, the first field of view may be a horizontal field of view, and the second field of view may be a vertical field of view.

In an example, the second field of view is between 10 to 170 degrees. In an example, the second field of view is between 20 to 150 degrees. In an example, the second field of view is between 40 to 150 degrees. In an example, the second field of view is between 50 to 150 degrees. In an example, the second field of view is between 60 to 140 degrees. In an example, the second field of view is between 70 to 130 degrees. In an example, the second field of view is between 70 to 120 degrees. In an example, the second field of view is approximately 40 degrees. In an example, the second field of view is approximately 50 degrees. In an example, the second field of view is approximately 60 degrees. In an example, the second field of view is approximately 70 degrees. In an example, the second field of view is approximately 90 degrees. In an example, the second field of view is approximately 100 degrees. In an example, the second field of view is approximately 120 degrees.

In example embodiments, the incoming beam(s) 110 are any incoming signal from an environment where the sensor 100 is located. For example, the incoming beam(s) 110 are optical beams received from the environment. The optical beams may be generated by various objects in the environment, for example by fire. The sensor 100 may for example use the incoming beams to detect a presence of the fire. In various embodiments herein as used in present disclosure, the term "fire" may also refer to combustion, smoldering, burning, excessive heat, and/or flame associated with or related to a state, process, or instance of combustion in which fuel or other material is ignited and combined with oxygen, giving off light, heat, and/or flame.

In example embodiments, the incoming beams are optical beams reflected from various objects in the environment. The reflected optical beams may be a reflection of the environment and/or background lights, such as daylight, from various objects. The reflected optical beams may be a reflection of light generated by one or more light sources, located on and/or in the sensor 100 or otherwise, from various objects. In various embodiments, the sensor 100 may for example use the incoming beams 110 to detect a movement and/or appearance of a living body in any of the first or second FoVs, for example movement and/or appearance of an individual, an animal, etc. For example, a living body may emit infrared beams generally in the 8-12 µm. In example embodiments, one or more filters may pass the 8-12 µm frequency range from one or more incoming beams. If a corresponding detector detects the presence of the 8-12 µm frequency range, the sensor 100 may detect a presence of a living body in the field of view. In example embodiments, the sensor 100 may detect movement and/or appearance of a living body similar to a thermal camera.

In various embodiments, the reflecting side 120 of the omnidirectional reflector 101 includes a shape of any of a spherical, aspherical, and/or freeform reflector. For example, the shape of the reflecting side 120 includes a curvature. In various embodiments, the reflecting side 120 surrounds the omnidirectional mirror 101 and provides the 360-degree first field of view. In various embodiments, the shape of the reflecting side 120 further determines the second field of view. In example embodiments, the shape of the reflecting side of the omnidirectional mirror 101 is selected to maximize the second field of view. For example, a freedom shape for the reflecting side, such as a complex shape including any combination of parabola, aspherical, etc., is selected such that the second field of view is maximized.

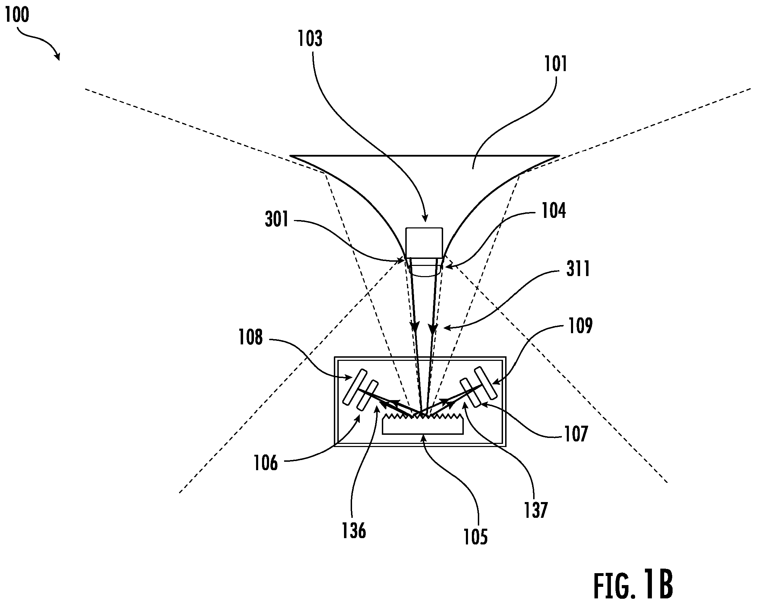

In various embodiments, the reflecting side 120 of the omnidirectional mirror 101 concentrates the collected one or more incoming beams 110 using the curvature of the reflecting side 120. In the example illustration of FIG. 1, a beam is shown using solid arrows and a path the beam follows in illustrated using dashed lines. For example, a beam of the one or more incoming beams 120 has the incoming beam's path 111. For example, the incoming beam's path may be a trajectory of the incoming beam. For example, the incoming beam may follow the paths as shown by the dashed lines in FIG. 1 (and other figures in the present disclosure) as it is reflected by and/or affected by other components. For example, the dashed lines show the one or incoming beams 110 are concentrated after being reflected from the reflecting side 120.

In various embodiments, a calibration source 103 is located inside the omnidirectional reflector 101. In various embodiments, the calibration source 103 is configured to generate one or more calibration beams, for example calibration beams 301 as shown in FIG. 1B, which is a schematic diagram illustrating the beams produced by the calibration source 103 of the sensor 100 in accordance with various embodiments of the present disclosure.

In various embodiments, the sensor 100 includes a concentrating lens 104 placed at the opening of the omnidirectional reflector 101. The concentrating lens may be configured to concentrate the one or more calibration beams 301 to generate the concentrated one or more calibration beams 311. The concentrated one or more calibration beams 311 may be concentrated on a beam splitter. In various embodiments, the concentrating lens 104 may be integrated into and/or be part of the calibration source 103. In various embodiments, the calibration beams 301 may be concentrated on the beam splitter 105 with or without a need for the concentrating lens 104. In example embodiment illustrated in Fig. 1B, the calibration beams generated by the calibration source, concentrated by the concentration lens according to various embodiments, are illustrated by solid arrows.

In various embodiments, the sensor 100 includes a beam splitter 105 configured to split the collected and concentrated incoming beams 124 to a first portion of the collected and concentrated incoming beams 126 and a second portion of the collected and concentrated incoming beams 127, as for example illustrated in FIG. 1A. In various embodiments, the beam splitter 105 splits the one or more calibration beams 301, or the concentrated one or more calibration beams 311, to the first portion of the calibration beams 136 and a second portion of the calibration beams 137, as for example illustrated in FIG. 1B.

In various embodiments, the beam splitter 105 is a micro prism beam splitter. A microprism beam splitter may split a beam into two or more beams by reflecting the beam on two or more facets of each micro prism of an array of micro prisms. Therefore, the micro prism array may split the beam into two, three, or more beams, according to the number of facets. Using a micro prism splitter may however divide the intensity of the beam, hence the generated beam portions may have less intensity (inversely proportional to the number of beam portions). For example, if a microprism beam splitter splits the beam into three beams portions, each of the three split beams may have about a third of the intensity of the original beam.

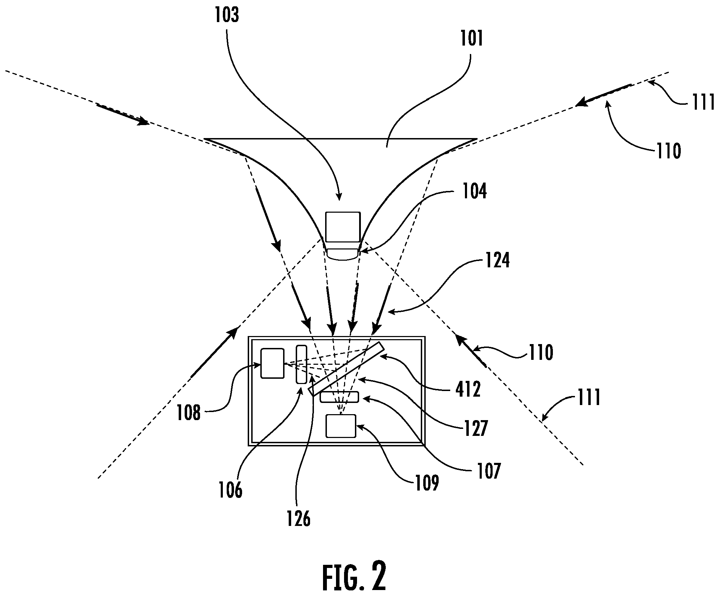

In various embodiments, the beam splitter used to generate the first and second portions of the collected and concentrated incoming beams (126, 127) and/or the first and second portions of the calibration beams (136, 137) may be a plate beam splitter for example as shown in FIG. 2. FIG. 2 is a schematic diagram illustrating the sensor 100 using a plate beam splitter 412 in accordance with various embodiments of the present disclosure. In various embodiments, the plate beam splitter 412 splits a beam by reflecting one generated beam portion and passing (or transmitting through) another beam portion. The plate beam splitter may be placed orthogonal to or at an angle to a beam, hence it may generate the beam portions at various angles. In example embodiments, the plate beam splitter 412 is placed at an approximately 45 degrees angle with respect to the collected and concentrated incoming beams 124, and generates the first and second portions of the collected and concentrated incoming beams (126, 127) so that they are orthogonal to each other. In various example embodiments, the plate beam splitter may facilitate various placings of the filters, detectors, and/or other splitters for receiving the generated beam portions (such as the first and second portions of the collected and concentrated one or more incoming beams 126, 127) hence providing more flexibility in the arrangement of components and providing more compact design and spatial savings and/or efficiently for the sensor device 100.

In example embodiments, the plate beam splitter 412 is an intensity-based beam splitter that may also split a beam intensity and divide a beam into lower intensity beam portions. For example, a 50:50 beam splitter may be used that divide the intensity by half and pass (or transmit through) the totality of the wavelength rage of the incident beam to the generated beam portions. The intensity-based beam splitters may provide the advantage of flexibility in placing filters or detectors, since all the generated beam portions include the full wavelength range of the incident beam on the beam splitter.

In example embodiments, the plate beam splitter 412 is a dichroic beam splitter that splits a beam spectrally (or with respect to their wavelength range) such that the generated beam portions each have a different wavelength range, but without any significant reduction in the intensity of the generated beam portions compared with the beam incident on the plate beam splitter. Using dichroic beam splitters may have the advantage of providing the full beam intensity of the incident beam to each detector which may provide larger signal to noise ratio, better detection, and/or larger detection range for the sensor.

In various embodiments, the sensor 100 includes a first filter 106 configured to filter first beams comprising any of a first portion of the collected and concentrated incoming beams 126 and a first portion of the calibration beams 136. In various embodiments, the sensor 100 includes a first detector 108 configured to detect the filtered first beams.

In various embodiments, the sensor 100 includes a second filter 107 configured to filter second beams comprising any of a second portion of the collected and concentrated incoming beams 127 and a second portion of the calibration beams 137. In various embodiments, the sensor 100 includes a second detector 109 configured to detect the filtered second beams.

In various embodiments, the sensor 100 may include more than two filters and corresponding detectors. For example, with reference to FIG. 1A, the microprism beam splitter 105 may split the collected and concentrated incoming beams 124 to three or more portions. Each portion may be filtered using a corresponding filter and detected using a corresponding detector. In various embodiments, as for example further described in the present disclosure, other beam splitters may be used to split a beam into three or more portions, where each beam portion may be filtered and/or detected using corresponding filters and/or detectors.

In various embodiments, the first filter 106 and the second filter 107 may each allow for certain characteristics of one or more first beams and one or more second beams to pass through, respectively. The certain characteristics may characterize and/or identify one or more incoming beams of interest.

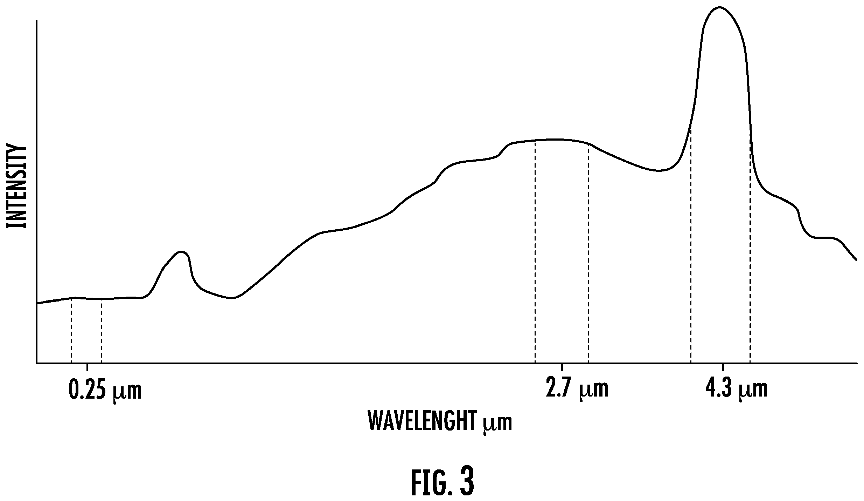

In various embodiments, the incoming beams of interest are due to and/or originate from a presence of object(s) and/or occurrence of events of interest in the environment. For example, certain levels of intensity in specific frequency and/or wavelength ranges of incoming beams may indicate a presence of fire in the environment. For example, FIG. 3 illustrates an intensity of one or more incoming beams from an environment in which a fire is present. For example, a beam intensity higher than a first threshold in the wavelength range around 0.25 µm (for example any range in 0.2-0.3 µm) indicates ultraviolet beams of interest caused by a fire. For example, a beam intensity higher than a second threshold in the wavelength range around 2.7 µm (for example any range in 2-3 µm) indicates infrared beams of interest caused by a fire. For example, a beam intensity higher than a third threshold in the wavelength range around 4.3 µm (for example any range in 3.7-4.8 µm) indicates infrared beams of interest caused by carbon dioxide.

In various embodiments, any of these beams of interests may be used to detect the presence of the fire. For example, the sensor 100 may split the collected and concentrated one or more incoming beams 124 to three portions, and each portion may be filtered using a bandpass filter corresponding to the wavelength ranges described above with respect to FIG. 3. The corresponding detectors may each detect the presence and/or determine the intensity of each of the beams of interest to determine the presence of the fire. In various embodiments, each or any combination of the wavelength ranges of interest (for example those illustrated in FIG. 3) may be selected using a dichroic beam splitter instead of or in addition to using filters. For example, when using a dichroic beam splitter for the plate beam splitter 412 in the example illustrated by FIG. 2, the dichroic beam splitter may split the incident beam to beam portions of any one or more wavelength ranges of interest. For example, the dichroic beam splitter may reflect beams in the wavelength range around 0.25 µm (for example any range in 0.2-0.3 µm) to a first detector, and pass beams in the wavelength range around 2.7 µm (for example any range in 2-3 µm) and in the wavelength range around 4.3 µm (for example any range in 3.7-4.8 µm) towards a second and/or a third detector. In various embodiments, another dichroic beam splitter may separate the beams in the wavelength range around 2.7 µm (for example any range in 2-3 µm) and beams in the wavelength range around 4.3 µm (for example any range in 3.7-4.8 µm) and direct each to a corresponding detector. In example embodiments, using dichroic beam splitter(s) may eliminate the need for using a bandpass filter corresponding to each detector, since the wavelength ranges of interest are directed to the corresponding detectors using dichroic beam splitters.

In various embodiments, the one or more calibration beams comprise characteristics similar to the incoming beam of interest, such as any of similar bandwidth, amplitude, intensity, power, energy, etc. In various embodiments, the sensor 100 uses the calibration beams having characteristics similar to a beam of interest to verify whether a corresponding detector correctly detects and/or identifies an object and/or event of interest that correspond to the beam of interest. For example, a calibration beam may be a beam with the intensity of or higher than the first threshold in the wavelength range around 0.25 µm (for example any range in 0.2-0.3 µm) that indicate ultraviolet beams of interest caused by a fire. The sensor 100 (or a controller electronically coupled to the sensor 100 as described below) may determine whether the corresponding detectors correctly detects and/or identifies a presence of a fire. In example embodiments, other calibration beams corresponding to the other wavelength ranges indicating fire, and/or having other characteristics indicating any other event and/or object of interest, and/or measurements of the objects of interest, may be used. In various embodiments, the sensor 100 is calibrated and or tuned based on the calibration process to provide acceptable detection and/or sensing.

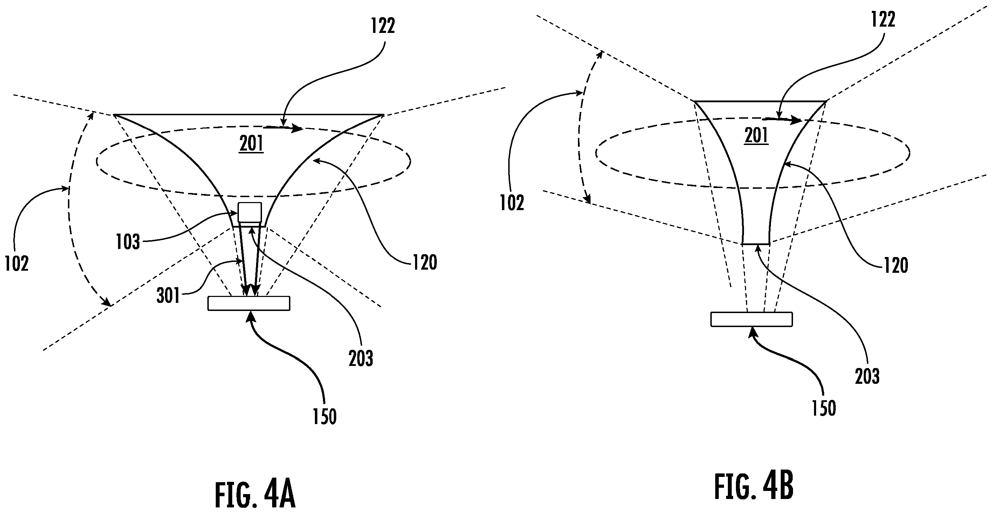

Referring now to FIGS. 4A and 4B, schematic diagrams illustrating the omnidirectional reflector 101 is presented in accordance with various embodiments of the present disclosure. In various embodiments, the omnidirectional mirror 101 may have a parabola, hyper parabola, aspheric, symmetric shape. In various embodiments, the reflective side 120 may have parabola, hyper parabola, aspheric, complex, and/or any freeform shape. In various embodiments, various shapes of the reflective side 120 may increase, decrease, and/or move the second field of view 102 (for example in a perpendicular direction to the first field of view 122) as for example illustrated by FIGS. 4A vs 4B. in various embodiments, the reflective side 120 provides a 360-degree first field of view.

In various embodiments, the omnidirectional reflector 101 includes an opening 203 configured to pass the one or more calibration beams 301 from the calibration source 103 to a beam splitter 150. In example embodiments, the beam splitter 150 may be any of a prism beam splitter, microprism beam splitter, plate beam splitter, dichroic beam splitter, and/or any other types of beam splitter. In various embodiments, the opening 203 is configured to pass the concentrated one or more calibration beams 301 from the calibration source 103 to the beam splitter as for example shown in FIG. 1B.

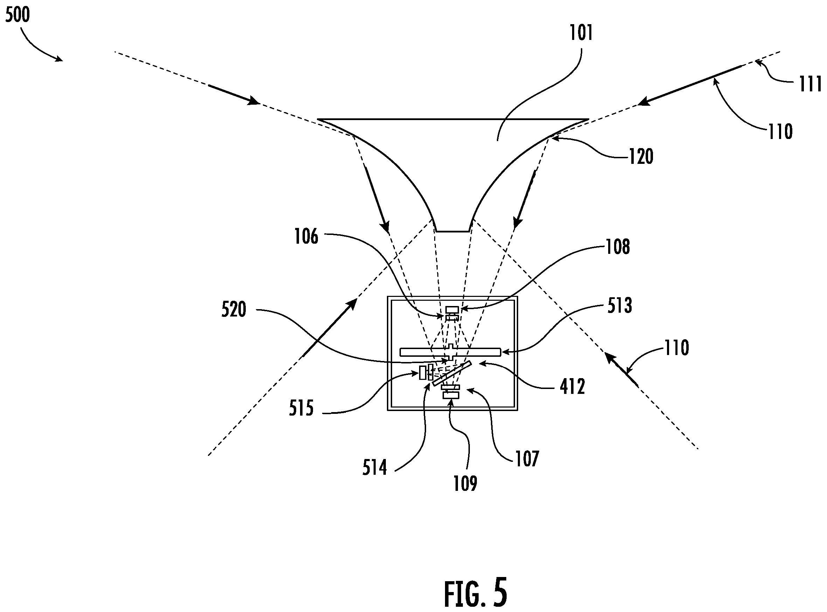

Referring now to FIG. 5, a schematic diagram illustrating a sensor 500 is provided in accordance with various embodiments of the present disclosure. In various embodiments, the sensor 500 includes the omnidirectional reflector 101. The omnidirectional reflector 101 may include the reflecting side 120 configured to collect one or more incoming beams from a 360-degree first field of view and a 180-degree or less second field of view and concentrate the collected beams using a curvature of the reflecting side, as for example described above.

In various embodiments, the sensor 500 includes a first dichroic beam splitter 513 located outside the omnidirectional reflector. In various embodiments, the dichroic beam splitter 513 is configured to split the collected and concentrated one or more incoming beams 124 to first portion of the collected and concentrated one or more incoming beams (for example the reflected beams on the beam paths shown above the dichroic beam splitter 513 in the example illustration of FIG. 5) and a second portion of the collected and concentrated one or more incoming beams (for example the passed through, or partially transmitted, beams on the beam paths shown below the dichroic beam splitter 513 in the example illustration of FIG. 5).

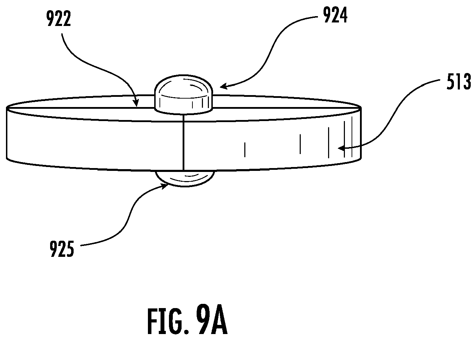

In various embodiments, the sensor 500 includes a first calibration source (for example the first calibration source 924 as illustrated in FIG 9A below) located on the first dichroic beam splitter 513. In various embodiments, the first calibration source 924 is held by a calibration lamp set holder 520. In various embodiments, the first calibration source 924 is configured to generate one or more first calibration beams. In various embodiments, the first one or more calibration beams may have similar characteristics to the one or more calibration beams described above.

In various embodiments, the sensor 500 includes the first filter 106. The first filter 106 may be configured to filter one or more first beams including any of the first portion of the collected and concentrated one or more incoming beams and the first calibration beams. In various embodiments, the sensor 500 includes the first detector 108 configured to detect the filtered one or more first beams.

In various embodiments, the sensor 500 includes a second calibration source (for example the second calibration source 925 as illustrated in FIG 9A below) located on the first dichroic beam splitter 513 on an opposite side of the first calibration source. In various embodiments, the second calibration source is configured to generate one or more second calibration beams. In various embodiments, the one or more second calibration beams may have similar characteristics to the one or more calibration beams described above.

In various embodiments, the sensor 500 includes a beam splitter including any of a prism, microprism, plate, or dichroic beam splitters. In various embodiments the sensor 500 includes a plate beam splitter 412. In various embodiments, the plate beam splitter 412 is configured to split the second portion of the collected and concentrated one or more incoming beams to third and fourth portions of the collected and concentrated one or more incoming beams. In various embodiments, the beam splitter (for example the plate beam splitter 412) is configured to split the one or more second calibration beams to first and second portions of the one or more second calibration beams.

In various embodiments, the sensor 500 includes the second filter 107 configured to filter one or more second beams that includes any of the third portion of the collected and concentrated one or more incoming beams and/or the first portion of the one or more second calibration beams. In various embodiments, the sensor 500 includes the second detector 109 configured to detect the filtered one or more second beams.

In various embodiments, the sensor 500 includes a third filter 514 configured to filter one or more third beams comprising any of the fourth portion of the collected and concentrated one or more incoming beams and/or the second portion of the one or more second calibration beams. In various embodiments, the sensor 500 includes a third detector 515 configured to detect the filtered one or more third beams.

In various embodiments, any of the first, second, and/or third filters allow the beams with characteristics corresponding to the characteristics of the beams of interests (which in turn correspond to the desired detections and/or sensing by the sensor) to pass through, as for example described with respect to sensor 100.

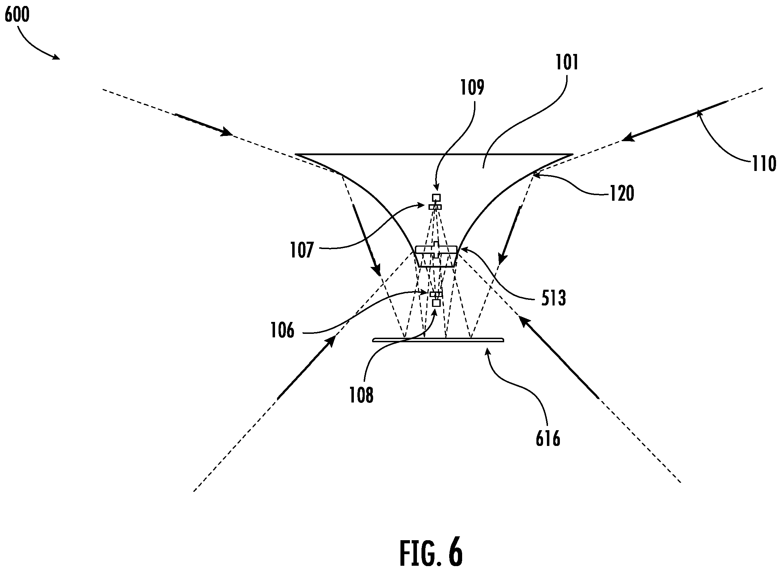

Referring now to FIG. 6, a schematic diagram illustrating a sensor 600 is illustrated in accordance with various embodiments of the present disclosure. In various embodiments, the sensor 600 includes the omnidirectional reflector 101. The omnidirectional reflector 101 may include the reflecting side 120 configured to collect one or more incoming beams from the 360-degree first field of view and the 180-degree or less second field of view. In various embodiments, the reflecting side is configured to concentrate the collected beams using a curvature of the reflecting side.

In various embodiments, the sensor 600 includes a folding reflector 616. The folding reflector may be configured to reflect the collected and concentrated one or more incoming beams. In example embodiments, the scale factor of the sensor 600 is reduce using the folding mirror. For example, the folding mirror may provide space saving and/or efficiency by allowing other or some other components to be placed above the folding mirror 616, for example placed in the omnidirectional mirror 101. In example embodiments, the folding mirror reduces spatial footprint of the sensor 600 and/or provides a more compact sensor, for example by utilizing the space inside the omnidirectional mirror 101 to place other or some other components of the sensor.

In various embodiments, the first dichroic beam splitter 513 is located inside the omnidirectional reflector 101. The first dichroic beam splitter 513 may be configured to split the collected, concentrated, and reflected one or more incoming beams to first portion of the collected, concentrated, and reflected one or more incoming beams (for example the reflected beams on the beam paths shown below the dichroic beam splitter 513 in the example illustration of FIG. 6) and a second portion of the collected, concentrated, and reflected one or more incoming beams (for example the passed through, or partially transmitted, beams on the beam paths shown above the dichroic beam splitter 513 in the example illustration of FIG. 6).

In various embodiments, the sensor 600 includes a first calibration source (for example the first calibration source 924 as illustrated in FIG 9A below) located on the first dichroic beam splitter and configured to generate one or more first calibration beams, as for example described above.

In various embodiments, the sensor 600 includes the first filter 106 configured to filter one or more first beams including any of the first portion of the collected, concentrated, and reflected one or more incoming beams and the one or more first calibration beams. In various embodiments, the sensor 600 includes the first detector 108 configured to detect the filtered one or more first beams.

In various embodiments, the sensor 600 includes a second calibration source (for example the second calibration source 925 as illustrated in FIG 9A below) located on the first the first dichroic beam splitter 513 on an opposite side of the first calibration source. In various embodiments, the second calibration source is configured to generate one or more second calibration beams. In various embodiments, the sensor 600 includes the second filter configured to filter one or more second beams including any of the second portion of the collected, concentrated, and reflected one or more incoming beams and the second calibration beams. In various embodiments, the sensor 600 includes a second detector 109 configured to detect the filtered one or more second beams.

In various embodiments, the sensor 600 includes another beam splitter (not shown). In example embodiments, the beam splitter may be any of a prism, microprism, plate, or dichroic beam splitter. In various embodiments, the beam splitter may be located between the first dichroic beam splitter 513 and the second filter 107 in FIG 6.

In various embodiments, the beam splitter is configured to split the second portion of the collected, concentrated, and reflected one or more incoming beams to a third and fourth portions of the collected, concentrated, and reflected one or more incoming beams (for example similar to the path beams shown in FIG. 5). In various embodiments, the beam splitter is configured to split the second calibration beams to a first and second portion of the second calibration beams.

In various embodiments, the sensor 600 includes the second filter 107 configured to filter one or more second beams including any of the third portion of the collected, concentrated, and reflected one or more incoming beams and the first portion of the one or more second calibration beams. In various embodiments, the sensor 600 includes the second detector 109 configured to detect the filtered one or more second beams.

In various embodiments, the sensor 600 includes a third filter (for example the third filter 514 with reference to FIG. 5) configured to filter one or more third beams comprising any of the fourth portion of the collected, concentrated, and reflected one or more incoming beams and the second portion of the one or more second calibration beams. In various embodiments, the sensor 600 includes a third detector (for example the third detector 515 with reference to FIG. 5) configured to detect the filtered one or more third beams.

In various embodiments, characteristics of the first, second, and/or third filter, and the calibration beams may include any value and/or range of bandwidth, amplitude, intensity, power, energy and are selected so that the sensor 600 functions as intended and/or is calibrated to function as intended as previously described.

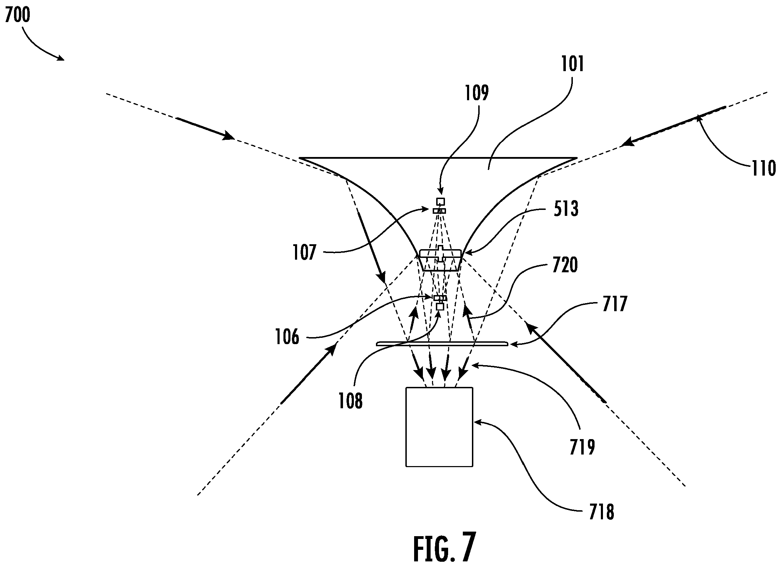

Referring now to FIG. 7, a schematic diagram illustrating a sensor 700 is provided in accordance with various embodiments of the present disclosure. In various embodiments, the sensor 700 includes the omnidirectional reflector 101. The omnidirectional reflector 101 may include a reflecting side configured to collect one or more incoming beams 110 from a 360-degree first field of view and a 180-degree or less second field of view and concentrate the collected beams using a curvature of the reflecting side.

In various embodiments, the sensor 700 includes a second dichroic beam splitter 717. The second dichroic beam splitter 717 may be located outside the omnidirectional reflector 101. In various embodiments, the second dichroic beam splitter 717 is configured to split the collected and concentrated one or more incoming beams. The second dichroic beam splitter 717 may reflect a portion of the collected and concentrated one or more incoming beams to generate a collected, concentrated, and reflected one or more incoming beams 720 (for example reflecting on the beam paths illustrated above the second dichroic beam splitter 717 in FIG. 7). The second dichroic beam splitter 717 may generate an imaging portion of the collected and concentrated one or more incoming beams 719, by passing the imaging portion of the collected and concentrated one or more incoming beams through (for example on the beam paths illustrated below the second dichroic beam splitter 717 in FIG. 7).

In various embodiments, the first dichroic beam splitter 513 is located inside the omnidirectional reflector. In various embodiments, the first dichroic beam splitter 513 is configured to split the collected, concentrated, and reflected one or more incoming beams 720 to a first portion of the collected, concentrated, and reflected one or more incoming beams (for example the beams reflected on the beam paths below the first dichroic beam splitter 513 as illustrated in FIG. 7). In various embodiments, the first dichroic beam splitter 513 is configured to split the collected, concentrated, and reflected one or more incoming beams 720 to a second portion of the collected, concentrated, and reflected one or more incoming beams (for example the beams reflected on the beam paths above the first dichroic beam splitter 513 as illustrated in FIG. 7).

In various embodiments, the sensor 700 includes a first calibration source (for example the first calibration source 924 as illustrated in FIG 9A below) located on the first dichroic beam splitter 513. In various embodiments, the first calibration source 924 is held by a calibration lamp set holder (for example calibration lamp set holder 520 with reference to FIG. 5). In various embodiments, the first calibration source is configured to generate one or more first calibration beams. In various embodiments, the first one or more calibration beams may have similar characteristics to the one or more calibration beams described above.

In various embodiments, the sensor 700 includes a second calibration source (for example the second calibration source 925 as illustrated in FIG 9A below) located on the first dichroic beam splitter 513 on an opposite side of the first calibration source. In various embodiments, the second calibration source is held by the calibration lamp set holder. In various embodiments, the second calibration source is configured to generate one or more second calibration beams. In various embodiments, the one or more second calibration beams may have similar characteristics to the one or more calibration beams described above.

In various embodiment, the sensor 700 includes the first filter 106 configured to filter one or more first beams comprising any of the first portion of the collected, concentrated, and reflected one or more incoming beams and the first calibration beams. In various embodiment, the sensor 700 includes the first detector 108 configured to detect the filtered one or more first beams.

In various embodiment, the sensor 700 includes the second filter 107 configured to filter one or more second beams comprising any of the second portion of the collected, concentrated, and reflected one or more incoming beams and the second calibration beams. In various embodiment, the sensor 700 includes the second detector 108 configured to detect the filtered one or more first beams.

In example embodiments, using the second dichroic beam splitter 717 provides an advantage of a reduced scale factor by allowing some of the components (such as the first dichroic beam splitter, splitter(s), filter(s), detector(s), calibration source(s), etc.) to be located on a reflating side of the second dichroic beam splitter 717 and/or inside the omnidirectional reflector 101. In example embodiments, the second dichroic beam splitter 717 provides an advantage of using other detectors, imaging devices, and/or cameras on the passing side of it.

In various embodiments, the sensor 700 includes a camera 718. In various embodiment, the camera 718 is located on the pass-through side of the second dichroic beam splitter 717. In various embodiments, the camera 718 is configured to receive the imaging portion of the collected and concentrated one or more incoming beams 719. In various embodiments, the camera 718 is configured to determine a location of the one or more incoming beams in the first or second fields of view.

For example, a camera may provide one or more images of the environment within the first and second FoVs of the sensor. In example embodiments, images provided by a camera may provide locating of an area of interest, for example location(s) of the one or more incoming beams 110 in the first or second fields of view (FoVs). For example, it may provide a location of fire in the FoVs. In example embodiments, images provided by a camera may be analyzed using image analysis or object recognition techniques to determine presence of and/or location(s) of various objects and/or events in the FoVs. For example, image analysis may be used to determine a presence of fire. In various embodiments, a controller may use any of the detections provided by one or more detectors, and the images provided by a camera to determine presence of various objects and/or events in the FoVs.

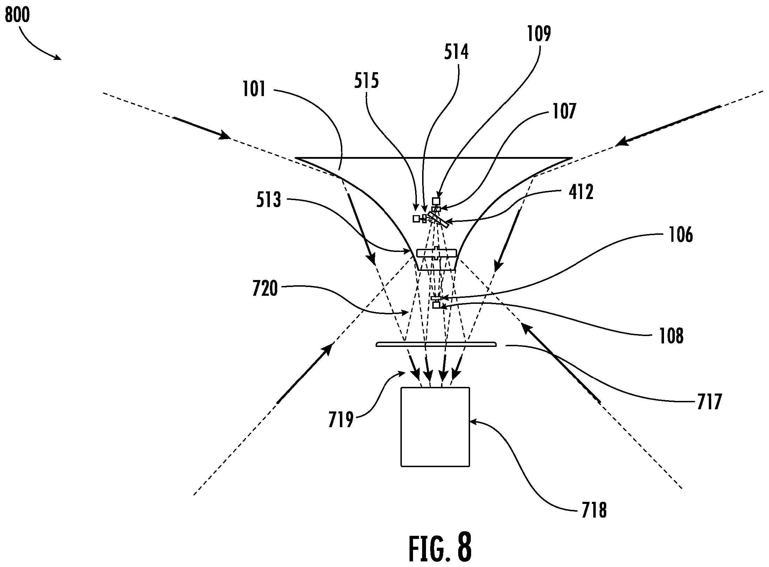

Referring now to FIG. 8, a schematic diagram illustrating a sensor 800 is provided in accordance with various embodiments of the present disclosure.

In various embodiments, the sensor 800 may in some respects be similar to the sensor 700 and further include a beam splitter to accommodate a third filter and detector. In various embodiments, the sensor 800 includes a beam splitter including any of a prism, microprism, plate, or dichroic beam splitters. In various embodiments the sensor 800 includes a plate beam splitter 412. In various embodiments, the plate beam splitter 412 is configured to split the collected, concentrated, and reflected one or more incoming beams 720 to a first and second portions of the collected and concentrated one or more incoming beams. In various embodiments, the beam splitter (for example the plate beam splitter 412) is configured to split the one or more second calibration beams to a first and second portion of the one or more second calibration beams.

In various embodiments, the sensor 800 includes the second filter 107 configured to filter one or more second beams that includes any of the first portion of the collected, concentrated, and reflected one or more incoming beams 720 and/or the first portion of the one or more second calibration beams. In various embodiments, the sensor 800 includes the second detector 109 configured to detect the filtered one or more second beams.

In various embodiments, the sensor 800 includes a third filter 514 configured to filter one or more third beams comprising any of the second portion of the collected, concentrated, and reflected one or more incoming beams 720 and/or the second portion of the one or more second calibration beams. In various embodiments, the sensor 800 includes a third detector 515 configured to detect the filtered one or more third beams.

In various embodiments, any of the first, second, and/or third filters allow the beams with characteristics corresponding to the characteristics of the beams of interests (which in turn correspond to the desired detections and/or sensing by the sensor) to pass through, as for example described with respect to sensor 100.

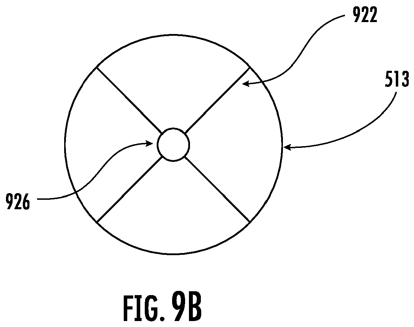

Referring now to FIGS. 9A, 9B, schematic diagrams from various perspectives illustrating the first dichroic beam splitter 513 and the first and second calibration sources 924 and 925 in accordance with various embodiments of the present disclosure are provided. In various embodiments, the sensors 500, 600, 700, 800 include the dichroic beam splitter 513 and the first and second calibration sources 924 and 925. In various embodiments, when some components of the sensor (for example first and second filters in the example arrangement of sensor 500 illustrated in FIG. 5) is on a line of sight from the opening 203 to one or more detectors of the sensor, it may not be practical to place the calibration source inside the omnidirectional reflector 101. The arrangement of the calibration sources on the first dichroic beam splitter 513 as for example illustrated in FIGS. 9A, 9B provides the advantage of having a line of sight from the calibration source(s) to the detector(s).

In various embodiments, as for example illustrated with respect to sensors 500, 600, 700, 800, due to the shape of the omnidirectional mirror 101, for example due to the opening 203, a center portion of the first dichroic beam splitter 513 may not receive incident beams (as for example is illustrated by the dashed beam paths in FIGS. 5, 6, 7, 8). For example, there may be a donut shaped incident area by one or more incoming beams (after any of the collection, concertation, reflection, etc.) on the first dichroic beam splitter 513. Hence, in various embodiments herein, placing the calibration source(s) in the center of the first dichroic beam splitter 513 does not block beam paths for the one or more collected, concentrated, and/or reflected incoming beams.

In various embodiments, a calibration light holder 926 is configured to hold the first and second calibration lights at a center of the first dichroic beam splitter 513.

In various embodiments, one or more electrical connectors 922 are disposed on the first dichroic beam splitter. In various embodiments, the one or more electrical connectors 922 are electronically coupled to any of the first and second calibration sources. In various embodiments, the one or more electrical connectors 922 are any of conductive electrode coatings on the first dichroic beam splitter 513, any coating disposed on or in the first dichroic beam splitter 513, any conductive integrated in first dichroic beam splitter 513, and/or wire placed on, integrated in, and/or attached to first dichroic beam splitter 513.

In various embodiments, a corresponding holder may hold any of the filters, detectors, beam splitters, etc. of the sensors in place.

For example, referring to FIGS. 5-8, a first filter and/or detector holder(s) are configured to hold any of the first filter and first detector in place. For example, second filter and/or detector holder(s) are configured to hold any of the second filter and/or second detector in place. For example, third filter and/or detector holder(s) are configured to hold any of the third filter and third detector in place. For example, beam splitter holder(s) are configured to hold any of the beam splitter(s) in place. In various embodiments, the holders may be any physical connectors, such as line connectors, web connectors, wires, etc.

In various embodiments, any of the holders may block beam paths for the one or more collected, concentrated, and/or reflected incoming beams and create shadow on the first dichroic beam splitter.

In various embodiments, the one or more electrical connectors 922 are located in a shadow of the holder(s) with respect to the collected, concentrated, and/or reflected one or more incoming beams. For example, placing the one or more electrical connectors 922 in the shadow(s), prevents reducing beam energy from receiving the corresponding detector(s) hence doing so may enhance sensing and/or detection of the corresponding sensor.

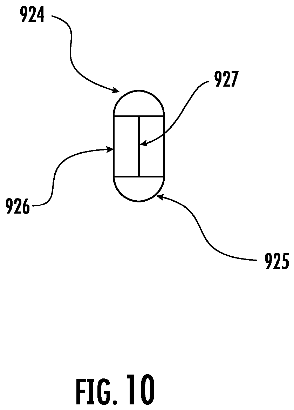

Referring now to FIG. 10, a schematic diagram illustrating a calibration light holder 926 configured to hold the first and second calibration lights 924 and 925 is provided in accordance with various embodiments of the present disclosure. In various embodiments, the calibration light holder 926 is placed at a center of the first dichroic beam splitter. In various embodiments, a conductive connector 927 electronically couples the first and second calibration lights 924 and 925.

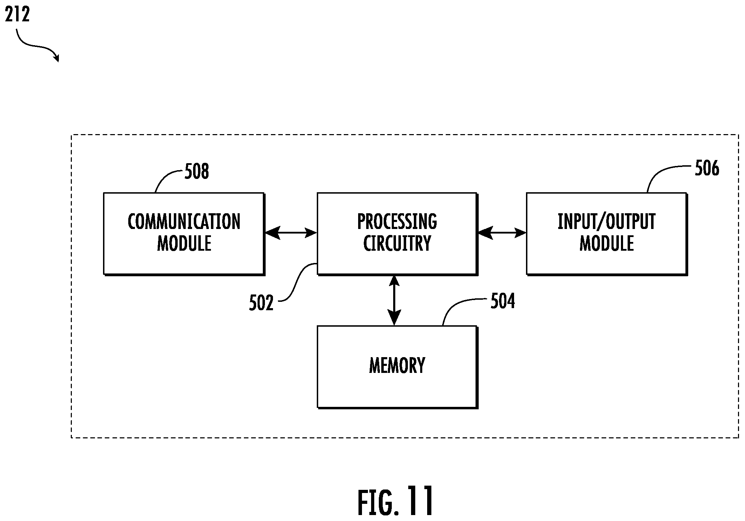

Referring now to FIG. 11, a schematic diagram depicting an example controller 212 of an example apparatus in electronic communications with various other components in accordance with various embodiments of the present disclosure is provided. For example, as described herein, the controller 212 may be in electronic communications with any of the sensors, and or the components of the sensors such as any of the camera(s), detector(s), filter(s), calibration source(s) etc. As shown, the controller 212 comprises processing circuitry 502, a communication module 508, input/output module 506, a memory 504 and/or other components configured to perform various operations, procedures, functions or the like described herein.

In various embodiments, the controller 212 (such as the processing circuitry 502, communication module 508, input/output module 506 and memory 504) is electrically coupled to and/or in electronic communication with the sensor(s) and/or any components of the sensor(s). In various embodiments, the sensor(s) and/or any components of the sensor(s) may exchange (e.g., transmit and receive) data with the processing circuitry 502 of the controller 212.

The processing circuitry 502 may be implemented as, for example, various devices comprising one or a plurality of microprocessors with accompanying digital signal processors; one or a plurality of processors without accompanying digital signal processors; one or a plurality of coprocessors; one or a plurality of multi-core processors; one or a plurality of controllers; processing circuits; one or a plurality of computers; and various other processing elements (including integrated circuits, such as ASICs or FPGAs, or a certain combination thereof). In some embodiments, the processing circuitry 502 may comprise one or more processors. In one exemplary embodiment, the processing circuitry 502 is configured to execute instructions stored in the memory 504 or otherwise accessible by the processing circuitry 502. When executed by the processing circuitry 502, these instructions may enable the controller 212 to execute one or a plurality of the functions as described herein. No matter whether it is configured by hardware, firmware/software methods, or a combination thereof, the processing circuitry 502 may comprise entities capable of executing operations according to the embodiments of the present invention when correspondingly configured. Therefore, for example, when the processing circuitry 502 is implemented as an ASIC, an FPGA, or the like, the processing circuitry 502 may comprise specially configured hardware for implementing one or a plurality of operations described herein. Alternatively, as another example, when the processing circuitry 502 is implemented as an actuator of instructions (such as those that may be stored in the memory 504), the instructions may specifically configure the processing circuitry 502 to execute one or a plurality of methods, algorithms and operations described herein, such as those discussed with reference to any of the figures herein.

The memory 504 may comprise, for example, a volatile memory, a non-volatile memory, or a certain combination thereof. Although illustrated as a single memory in FIG. 5, the memory 504 may comprise a plurality of memory components. In various embodiments, the memory 504 may comprise, for example, a hard disk drive, a random access memory, a cache memory, a flash memory, a Compact Disc Read-Only Memory (CD-ROM), a Digital Versatile Disk Read-Only Memory (DVD-ROM), an optical disk, a circuit configured to store information, or a certain combination thereof. The memory 504 may be configured to store information, data, application programs, instructions, and etc., so that the controller 212 can execute various functions according to the embodiments of the present disclosure. For example, in at least some embodiments, the memory 504 is configured to cache input data for processing by the processing circuitry 502. Additionally or alternatively, in at least some embodiments, the memory 504 is configured to store program instructions for execution by the processing circuitry 502. The memory 504 may store information in the form of static and/or dynamic information. When the functions are executed, the stored information may be stored and/or used by the controller 212.

The communication module 508 may be implemented as any apparatus included in a circuit, hardware, a computer program product or a combination thereof, which is configured to receive and/or transmit data from/to another component or apparatus. The computer program product comprises computer-readable program instructions stored on a computer-readable medium (for example, the memory 504) and executed by a controller 212 (for example, the processing circuitry 502). In some embodiments, the communication module 508 (as with other components discussed herein) may be at least partially implemented as the processing circuitry 502 or otherwise controlled by the processing circuitry 502. In this regard, the communication module 508 may communicate with the processing circuitry 502, for example, through a bus. The communication module 508 may comprise, for example, antennas, transmitters, receivers, transceivers, network interface cards and/or supporting hardware and/or firmware/software, and is used for establishing communication with another apparatus. The communication module 508 may be configured to receive and/or transmit any data that may be stored by the memory 504 by using any protocol that can be used for communication between apparatuses. The communication module 508 may additionally or alternatively communicate with the memory 504, the input/output module 506 and/or any other component of the controller 212, for example, through a bus.

In some embodiments, the controller 212 may comprise an input/output module 506. The input/output module 506 may communicate with the processing circuitry 502 to receive instructions input by the user and/or to provide audible, visual, mechanical or other outputs to the user. Therefore, the input/output module 506 may be in electronic communication with supporting devices, such as a keyboard, a mouse, a display, a touch screen display, and/or other input/output mechanisms. Alternatively, at least some aspects of the input/output module 506 may be implemented on a device used by the user to communicate with the controller 212. The input/output module 506 may communicate with the memory 504, the communication module 508 and/or any other component, for example, through a bus. One or a plurality of input/output modules and/or other components may be included in the controller 212.

In various embodiments, any of the sensors described in various embodiments of the present disclosure (for example any of sensors 100, 500, 600, 700, 800, 1500) may include the processing circuitry 502 electronically coupled to any of the detectors. For example, the processing circuitry may be electronically coupled to the first detector 108. In various embodiments, the processing circuitry is configured to process the detected filtered one or more first beams. For example, the processing circuitry may be configured to interpret the detection performed by the detect, convert data, etc. In various embodiments, any of the sensors described herein may include the memory 504, electronically coupled to the processing circuitry. In various embodiments, the memory 504 is configured to store a firmware controlling an operation of the sensor. In various embodiments, the firmware may for example comprise instructions for the processing circuitry to process the detected filtered one or more first beams.

In various embodiments, any of the detectors of any of the sensors described by various embodiments herein is configured to detect one or more incoming optical communications beams. The incoming optical communications beams may be originated from an external data transmission device. In various embodiments, the optical communications beams are collected by the omnidirectional reflector from the first and second fields of view of the sensor. In various embodiments, the one or more incoming optical communications beams comprise data for performing a configuration on the sensor. For example, the one or more incoming optical communications beams comprise data for updating the firmware. For example, the one or more incoming optical communications beams comprise data for adjusting a setting in any of the components of the sensor, such as detectors, filter, calibration source, internal optical source, beam splitter(s), etc.

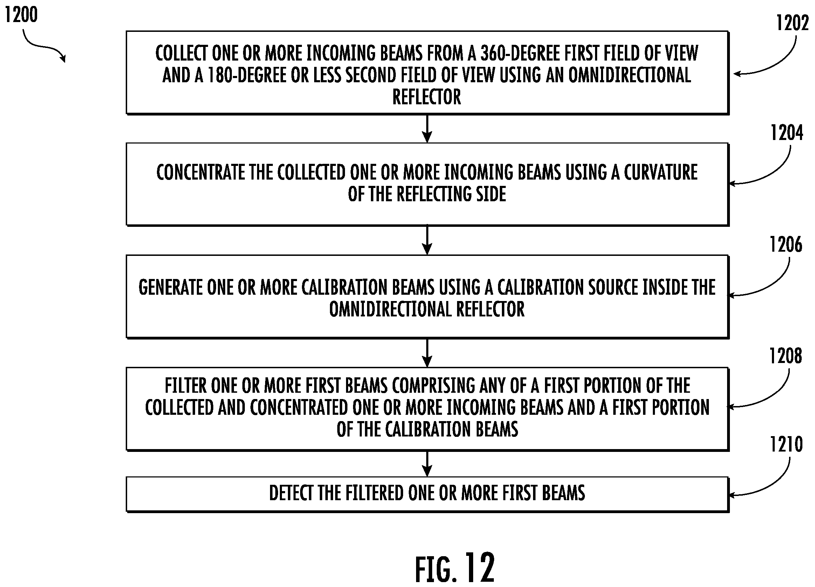

Referring now to FIG. 12, a flowchart diagrams illustrating example operations 1200, in accordance with various embodiments of the present disclosure are provided.

In some examples, the method 1200 may be performed by sensor 100. In various embodiments, at step 1202, a sensor (such as, but not limited to, sensor 100) may collect one or more incoming beams from a 360-degree first field of view and a 180-degree or less second field of view for example using an omnidirectional reflector. In various embodiments, at step 1204 a sensor may concentrate the collected one or more incoming beams for example using a curvature of a reflecting side of the omnidirectional sensor. In various embodiments, at step 1206 a sensor may generate one or more calibration beams for example using a calibration source inside the omnidirectional reflector. In various embodiments, at step 1208 a sensor may filter one or more first beams comprising any of a first portion of the collected and concentrated one or more incoming beams and a first portion of the calibration beams. In various embodiments, at step 1210 a sensor may detect the filtered one or more first beams.

In various embodiments, the method 1200 may filter one or more second beams comprising any of a second portion of the collected and concentrated one or more incoming beams and a second portion of the calibration beams, using for example a second filter of a sensor. In various embodiments, the method 1200 detects the filtered one or more second beams, using for example a second filter of a sensor.

In various embodiments, the method 1200 splits the collected and concentrated one or more incoming beams to the first and second portions of the collected and concentrated one or more incoming beams and splits the calibration beams to the first and second portion of the calibration beams using for example a beam splitter of a sensor.

In various embodiments, the method 1200 concentrates the one or more calibration beams on the beam splitter, for example using a concentrating lens placed at an opening of the omnidirectional reflector of a sensor.

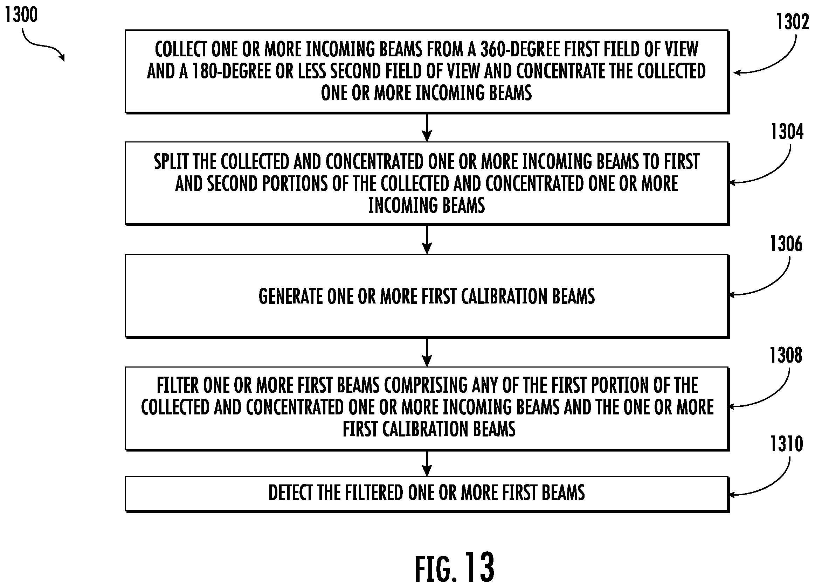

Referring now to FIG. 13, a flowchart diagrams illustrating example operations 1300, in accordance with various embodiments of the present disclosure are provided.

In some examples, the method 1300 may be performed by sensor 500. In various embodiments, at step 1302, a sensor (such as, but not limited to, sensor 500) may collect one or more incoming beams from a 360-degree first field of view and a 180-degree or less second field of view for example using an omnidirectional reflector. In various embodiments, a sensor may concentrate the collected one or more incoming beams for example using a curvature of a reflecting side of the omnidirectional sensor.

In various embodiments, at step 1304 the method 1300 splits the collected and concentrated one or more incoming beams to first and second portions of the collected and concentrated one or more incoming beams, for example using a first dichroic beam splitter located outside the omnidirectional reflector of a sensor.

In various embodiments, at step 1306, the method 1300 generates one or more first calibration beams, for example using a first calibration source located on the first dichroic beam splitter of a sensor.

In various embodiments, at step 1308, the method 1300 filters one or more first beams comprising any of the first portion of the collected and concentrated one or more incoming beams and the one or more first calibration beams, for example using a first filter of a sensor.

In various embodiments, at step 1310, the method 1300 detects the filtered one or more first beams, for example using a first detector of a sensor.

In various embodiments, the method 1300 may generate one or more second calibration beams for example using a second calibration source located on the first dichroic beam splitter on an opposite side of the first calibration source. In various embodiments, the method 1300 may split the second portion of the collected and concentrated one or more incoming beams to a third and fourth portions of the collected and concentrated one or more incoming beams and split the one or more second calibration beams to a first and second portion of the one or more second calibration beams, for example using a beam splitter of a sensor.

In various embodiments, the method 1300 may filter one or more second beams comprising any of the third portion of the collected and concentrated one or more incoming beams and the first portion of the one or more second calibration beams, for example using a second filter of a sensor. In various embodiments, the method 1300 may detect the filtered one or more second beams using a second detector of a sensor.

In various embodiments, the method 1300 may filter one or more third beams comprising any of the fourth portion of the collected and concentrated one or more incoming beams and the second portion of the one or more second calibration beams for example using a third filter of a sensor. In various embodiments, the method 1300 may detect the filtered one or more third beams for example using a third detector of the sensor.

In various embodiments, the method 1300 may hold the first and second calibration lights at a center of the first dichroic beam splitter for example using a calibration light holder of a sensor. In various embodiments, the method 1300 may hold any of the first filter and first detector for example using a first filter or detector holder of a sensor.

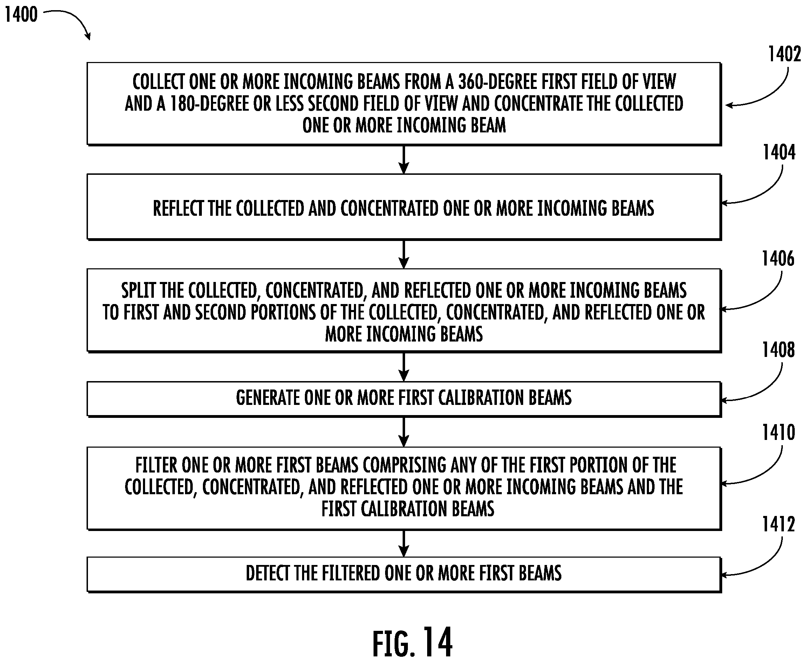

Referring now to FIG. 14, a flowchart diagrams illustrating example operations 1400, in accordance with various embodiments of the present disclosure are provided.

In some examples, the method 1400 may be performed by sensor 600. In various embodiments, at step 1402, a sensor (such as, but not limited to, sensor 600) may collect one or more incoming beams from a 360-degree first field of view and a 180-degree or less second field of view for example using an omnidirectional reflector. In various embodiments, a sensor may concentrate the collected one or more incoming beams for example using a curvature of a reflecting side of the omnidirectional sensor.

In various embodiments, at step 1404, the method 1400 reflects the collected and concentrated one or more incoming beams for example using a folding reflector of a sensor. In various embodiments, at step 1406, the method 1400 splits the collected, concentrated, and reflected one or more incoming beams to first and second portions of the collected, concentrated, and reflected one or more incoming beams, for example using a first dichroic beam splitter located inside the omnidirectional reflector of a sensor.

In various embodiments, at step 1408, the method 1400 generates one or more first calibration beams for example using a first calibration source located on the first dichroic beam splitter of a sensor.

In various embodiments, at step 1410, the method 1400 filters one or more first beams comprising any of the first portion of the collected, concentrated, and reflected one or more incoming beams and the first calibration beams, for example using a first filter of a sensor. In various embodiments, at step 1412, the method 1400 detect the filtered one or more first beams for example using a first detector of a sensor.

In various embodiments, the method 1400 may generate one or more second calibration beams for example using a second calibration source located on the first dichroic beam splitter on an opposite side of the first calibration source, the second calibration source of a sensor.

In various embodiments, the method 1400 may split the second portion of the collected, concentrated, and reflected one or more incoming beams to a third and fourth portions of the collected, concentrated, and reflected one or more incoming beams and split the second calibration beams to a first and second portion of the one or more second calibration beams using a beam splitter of a sensor.

In various embodiments, the method 1400 may filter one or more second beams comprising any of the third portion of the collected, concentrated, and reflected one or more incoming beams and the first portion of the one or more second calibration beams, for example using a second filter of a sensor. In various embodiments, the method 1400 may detect the filtered one or more second beams, for example using a second detector of a sensor.

In various embodiments, the method 1400 may filter one or more third beams comprising any of the fourth portion of the collected, concentrated, and reflected one or more incoming beams and the second portion of the one or more second calibration beams, for example using a third filter of a sensor. In various embodiments, the method 1400 may detect the filtered one or more third beams.

In various embodiments, the method 1400 may hold the first and second calibration lights at a center of the first dichroic beam splitter, for example using a calibration light holder of a sensor. In various embodiments, the method 1400 may hold any of the first filter and first detector for example using a first filter or detector holder.

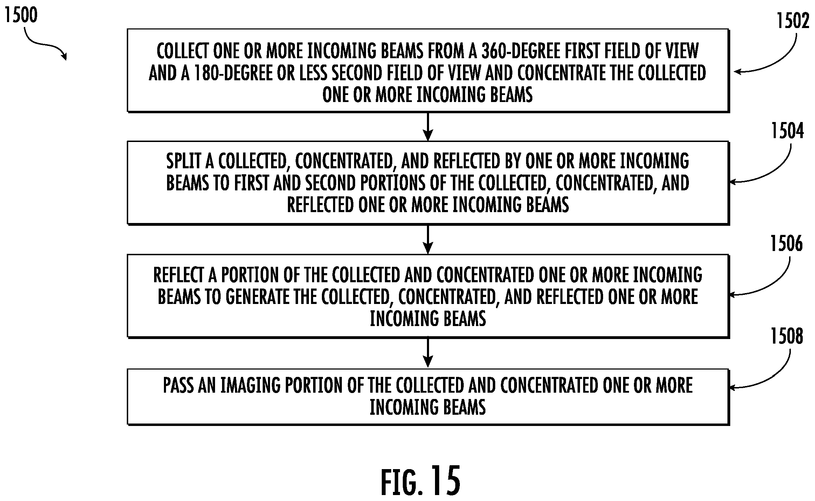

Referring now to FIG. 15, a flowchart diagrams illustrating example operations 1500, in accordance with various embodiments of the present disclosure are provided.

In some examples, the method 1500 may be performed by sensor 700 or 800. In various embodiments, at step 1502, a sensor (such as, but not limited to, sensor 700 or 800) may collect one or more incoming beams from a 360-degree first field of view and a 180-degree or less second field of view for example using an omnidirectional reflector. In various embodiments, a sensor may concentrate the collected one or more incoming beams for example using a curvature of a reflecting side of the omnidirectional sensor.

In various embodiments, at step 1504, the method 1500 splits a collected, concentrated, and reflected by one or more incoming beams to first and second portions of the collected, concentrated, and reflected one or more incoming beams, for example using a first dichroic beam splitter located inside the omnidirectional reflector of a sensor.

In various embodiments, at step 1506, the method 1500 reflects a portion of the collected and concentrated one or more incoming beams to generate the collected, concentrated, and reflected one or more incoming beams, for example using a second dichroic beam splitter of a sensor. In various embodiments, at step 1508, the method 1500 passes an imaging portion of the collected and concentrated one or more incoming beams for example using the second dichroic beam splitter of the sensor.

In various embodiments, the method 1500 may generate one or more first calibration beams, for example using a first calibration source located on the first dichroic beam splitter. In various embodiments, the method 1500 may filter one or more first beams comprising any of the first portion of the collected, concentrated, and reflected one or more incoming beams and the first calibration beams, for example using a first filter of a sensor.

In various embodiments, the method 1500 may detect the filtered one or more first beams, for example using a first detector.

In various embodiments, the method 1500 may receive the imaging portion of the collected and concentrated one or more incoming beams and determine a location of the one or more incoming beams in the first or second fields of view, for example using a camera of the sensor.

In some examples, one or more of the procedures and/or methods described herein, and/or a script to instruct various component to perform the corresponding function(s) may be embodied by computer program instructions, which may be stored by a memory (such as a non-transitory memory) of a system employing an embodiment of the present disclosure and executed by a processing circuitry (such as a processor) of the system. These computer program instructions may direct the system to function in a particular manner, such that the instructions stored in the memory circuitry produce an article of manufacture, the execution of which implements the function specified in the flow diagram step/operation(s). Further, the system may comprise one or more other circuitries. Various circuitries of the system may be electronically coupled between and/or among each other to transmit and/or receive energy, data and/or information.

In some examples, embodiments may take the form of a computer program product on a non-transitory computer-readable storage medium storing computer-readable program instruction (e.g., computer software). Any suitable computer-readable storage medium may be utilized, including non-transitory hard disks, CD-ROMs, flash memory, optical storage devices, or magnetic storage devices.

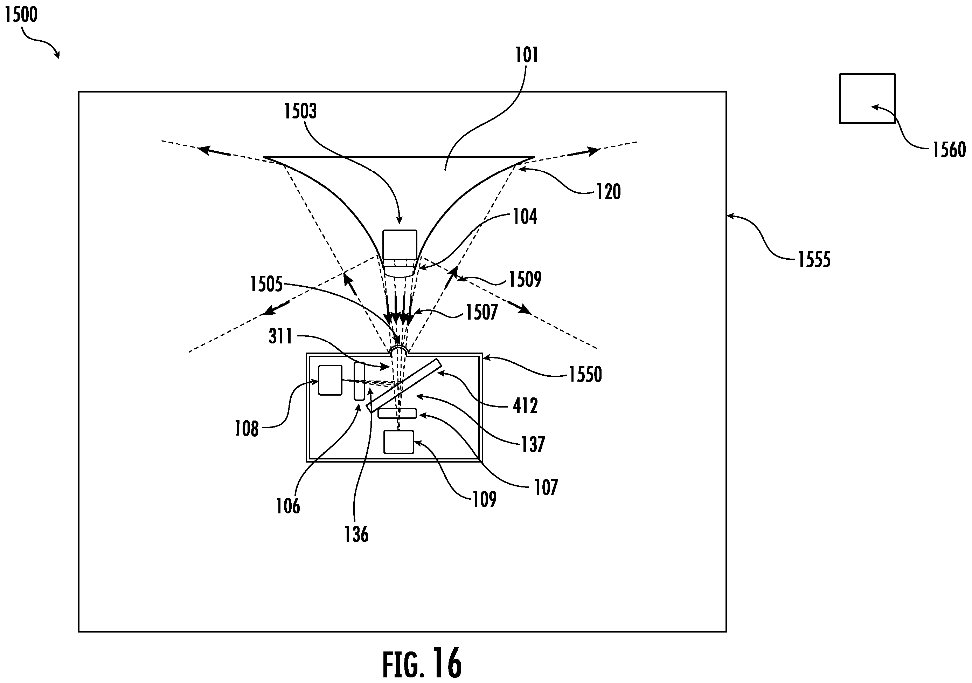

Referring now to FIG. 16, a schematic diagram illustrating a sensor 1500 is provided in accordance with various embodiments of the present disclosure. In various embodiments, the sensor 1500 includes the omnidirectional reflector 101 including the reflecting side 120 configured to collect one or more incoming beams from a 360-degree first field of view and a 180-degree or less second field of view and concentrate the collected one or more incoming beams using a curvature of the reflecting side.

In various embodiments, the sensor 1500 includes an internal optical source 1503 located inside the omnidirectional reflector. In various embodiments, the internal optical source 1503 is configured to generate one or more internal optical beams 1507. In various embodiments, the one or more internal optical beams 1507 may be concentrated and/or become converging using a concentrating lens 104. In various embodiments, the one or more internal optical beams include one or more outgoing optical communications beams and one or more calibration beams. The one or more outgoing optical communications beams may be used by the sensor 1500 to communicate information to the outside of the sensor 1500. For example, the sensor 1500 may use the one or more optical communications beams to transfer information to a remote optical receiver 1560. In doing so, the remote optical receiver may gather information on the operation of the sensor 1500 or may collect detected and/or sensed information from the sensor 1500. Therefore, in accordance with the various embodiments, sensed or detected information by sensor 1500 may be transmitted to other devices using free space optical communications. In various embodiments, the internal optical source 1503 is electronically and/or optically coupled to any of the detectors, a controller (for example controller 212, with reference to FIG. 11), or a processing circuitry (for example processing circuitry 502, with reference to FIG. 11) of a sensor 1500.

In various embodiments, the one or more internal optical beams may include the calibration beams, as previously described. In various embodiments, the internal optical beams may be any combination and or superposition of the outgoing optical communications beams and one or more calibration beams.

In various embodiments, the sensor 1500 includes a convex beam splitter 1505. In various embodiments, the convex beam splitter 1505 is a convex transparent material with a beam splitter coating. In various embodiments, the convex beam splitter 1505 is integrated with and/or is a part of an optical container 1550. The optical container 1550 may be configured to contain various components of the sensor 1500, for example beam splitter(s), filter(s) and/or detectors. In various embodiments, the convex beam splitter 1505 is configured to split the one or more internal optical beams to the one or more outgoing optical communications beams and the one or more calibration beams. In various embodiments, the convex beam splitter 1505 reflects the one or more outgoing optical communications beams to the omnidirectional reflector (for example beams 1509), and the omnidirectional reflector is configured to reflect the outgoing optical communications beams to outside of the sensor, for example to the optical receiver 1560, or to other sensors. In various embodiments, the convex beam splitter 1505 is configured to pass the one or more calibration beams to a beam splitter, for example plate beam splitter 412.

In various embodiments, the plate beam splitter 412 is configured to split the collected and concentrated one or more incoming beams to a first and second portions of the collected and concentrated one or more incoming beams (as for example was shown in FIG. 2), and split the calibration beams 311 to the first and second portions of the calibration beams (136, 137).

In various embodiments, the sensor 1500 includes a first filter 106 configured to filter one or more first beams comprising any of a first portion of the collected and concentrated one or more incoming beams (not shown in FIG. 15) and a first portion of the calibration beams 136. In various embodiments the sensor 1600 includes a first detector 108 configured to detect the filtered one or more first beams. In various embodiments, the one or more outgoing optical communications beams comprise data representative of the detection of the filtered one or more first beams.

In various embodiments, the sensor 1500 includes a second filter 107 configured to filter one or more second beams comprising any of a second portion of the collected and concentrated one or more incoming beams and a second portion of the calibration beams. In various embodiments, the sensor 1500 includes a second detector configured to detect the filtered one or more second beams.

In various embodiments, the internal optical source is electronically coupled to any of the first and second detectors, and the one or more calibration beams comprise data representative of the detection of the filtered one or more second beams.

In various embodiments, the sensor 1500 includes an optical window 1555. The optical window may surround other components of the sensor 1500 and may be made of and/or include transparent material. In various embodiments, the optical window is configured to protect the sensor 1500. In various embodiments, the optical window 1555 is external to the sensor. In various embodiments, the optical window 1555 may cover and/or protect only components of the sensor that may be exposed to the surprinting environment. For example, the optical window 1555 may cover the omnidirectional mirror 101.

In various embodiments, the optical window 1555 may become opaque due to dust, dirt, mud, rain, and/or any other obstruction. In various embodiments herein, the optical communications to and/or from the sensors (for example sensor 1500) may be used to detect the opaqueness and/or any obstruction on the optical window 1555. In various embodiments, a reception of the one or more outgoing optical communications beams by the optical receiver 1560 indicates an obstruction on the optical window. In various embodiments, when the optical receiver 1560 does not receive the optical communications and/or receives attenuated optical communications below a threshold, it indicates the opaqueness and/or any obstruction on the optical window 1555.

In various embodiments, optical communications among various sensors, for example various sensors 1500, may be used to prevent and/or reduce false alarm. For example, if a number of sensors below a certain threshold indicate a presence of the detection object of interest, for example fire, the network of the sensors may determine the detection is a false alarm.

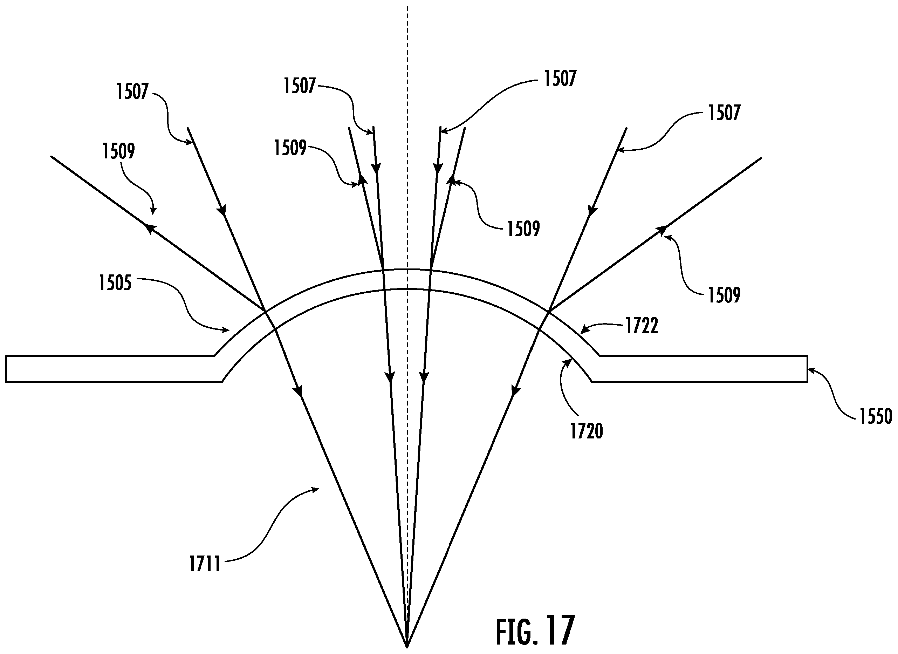

Referring now to FIG. 17, a schematic diagram illustrating the convex beam splitter 1505 is illustrated, in accordance with various embodiments of the present disclosure. In various embodiments, the one or more internal optical beams 1507 are emitted on the convex beam splitter 1505. In various embodiments, the one or more internal optical beams 1507 may be concentrated and/or become converging on the convex beam splitter 1505 using a concentrating lens 104. In various embodiments, the one or more internal optical beams include one or more outgoing optical communications beams and one or more calibration beams. In various embodiments, the convex beam splitter 1505 splits the beam 1507 to the reflected beams 1509 and the partially transmitted beams 1711. In various embodiments, the reflected beams 1509 may be one or more outgoing optical communications beams emitted to the omnidirectional reflector, which in turn are reflected to the outside environment of the sensor. In various embodiments, the partially transmitted beams 1711 may be used for calibration as described herein. In various embodiments, the partially transmitted beams 1711 may include any of a portion of the outgoing optical communications beams and/or incoming optical communications beams.

In various embodiments, the convex beam splitter 1505 includes an upper surface 1722 and a lower surface 1720. In various embodiments, all or parts of the optical container 1550 is made from transparent material such as glass, etc. In various embodiments, the convex portion of the optical container 1550 is made from transparent material. In various embodiments, the upper surface 1722 and the lower surface 1720 have a same radius curvature with sign convention such that the effective optical power for a transmitted beam through the convex portion of the optical container 1550 is zero. In various embodiments, the upper surface 1722 of the convex portion is optically coated with beam splitter coating to provide the convex beam splitter 1505. Therefore, in various embodiments, a portion of an incoming beam to the convex beam splitter 1505 (for example beam 1507) is reflected from the upper surface 1722, diverges and reflects again from the reflecting surface 120 (with reference to FIG. 16) to be used for any of detection of opaqueness or obstruction on the optical window 1555, as one or more optical communications beams and/or for illumination purposes.

Many modifications and other embodiments of the present disclosure set forth herein will come to mind to one skilled in the art to which these embodiments pertain having the benefit of the teachings presented in the foregoing descriptions and the associated drawings. Therefore, it is to be understood that the disclosure is not to be limited to the specific embodiments disclosed . The invention is defined by the appended claims.

## Claims

1. A sensor comprising:
an omnidirectional reflector comprising a reflecting side configured to:
collect one or more incoming beams from a 360-degree first field of view and a 180-degree or less second field of view; and
concentrate the collected one or more incoming beams using a curvature of the reflecting side;
a calibration source located inside the omnidirectional reflector and configured to generate one or more calibration beams;
a first filter configured to filter one or more first beams comprising any of a first portion of the collected and concentrated one or more incoming beams and a first portion of the calibration beams; and
a first detector configured to detect the filtered one or more first beams.

2. The sensor of claim 1, comprising:
a second filter configured to filter one or more second beams comprising any of a second portion of the collected and concentrated one or more incoming beams and a second portion of the calibration beams;
a second detector configured to detect the filtered one or more second beams; and
a beam splitter configured to:
split the collected and concentrated one or more incoming beams to the first and second portions of the collected and concentrated one or more incoming beams; and
split the calibration beams to the first and second portion of the calibration beams,
wherein the beam splitter comprises any of a micro prism beam splitter, a plate beam splitter, or a dichroic beam splitter, and the omnidirectional reflector comprises an opening configured to pass the one or more calibration beams from the calibration source to the beam splitter.

3. The sensor of claim 2, comprising a concentrating lens placed at the opening of the omnidirectional reflector, the concentrating lens configured to concentrate the one or more calibration beams on the beam splitter.

4. The sensor of claim 1, wherein the one or more calibration beams comprise characteristics of an incoming beam of interest, the characteristics comprising any of bandwidth, amplitude, intensity, power, energy.

5. A sensor comprising:
an omnidirectional reflector comprising a reflecting side configured to:
collect one or more incoming beams from a 360-degree first field of view and a 180-degree or less second field of view; and
concentrate the collected beams using a curvature of the reflecting side;
a first dichroic beam splitter located outside the omnidirectional reflector and configured to split the collected and concentrated one or more incoming beams to first and second portions of the collected and concentrated one or more incoming beams;
a first calibration source located on the first dichroic beam splitter and configured to generate one or more first calibration beams;
a first filter configured to filter one or more first beams comprising any of the first portion of the collected and concentrated one or more incoming beams and the one or more first calibration beams; and
a first detector configured to detect the filtered one or more first beams.

6. The sensor of claim 5, comprising:
a second calibration source located on the first dichroic beam splitter on an opposite side of the first calibration source, the second calibration source configured to generate one or more second calibration beams; and
a beam splitter configured to:
split the second portion of the collected and concentrated one or more incoming beams to a third and fourth portions of the collected and concentrated one or more incoming beams; and
split the one or more second calibration beams to a first and second portion of the one or more second calibration beams.

7. The sensor of claim 6, further comprising:
a second filter configured to filter one or more second beams comprising any of the third portion of the collected and concentrated one or more incoming beams and the first portion of the one or more second calibration beams;
a second detector configured to detect the filtered one or more second beams;
a third filter configured to filter one or more third beams comprising any of the fourth portion of the collected and concentrated one or more incoming beams and the second portion of the one or more second calibration beams; and
a third detector configured to detect the filtered one or more third beams.

8. The sensor of claim 6, further comprising:
a first filter or detector holder configured to hold any of the first filter and first detector; and
one or more electrical connectors disposed on the first dichroic beam splitter, the one or more electrical connectors electronically coupled to any of the first and second calibration sources, wherein the one or more electrical connectors are disposed in a shadow of the holder with respect to the collected and concentrated one or more incoming beams.

9. The sensor of claim 5, comprising:
a processing circuitry electronically coupled to the first detector, the processing circuitry configured to process the detected filtered one or more first beams; and
a memory, electronically coupled to the processing circuitry, the memory configured to store a firmware comprising instructions for the processing circuitry to process the detected filtered one or more first beams,
wherein the first detector is configured to detect one or more incoming optical communications beams collected by the omnidirectional reflector from the first and second fields of view, wherein the one or more incoming optical communications beams comprise data for updating the firmware.

10. A sensor comprising:
an omnidirectional reflector comprising a reflecting side configured to:
collect one or more incoming beams from a 360-degree first field of view and a 180-degree or less second field of view; and
concentrate the collected beams using a curvature of the reflecting side;
a folding reflector configured to reflect the collected and concentrated one or more incoming beams;
a first dichroic beam splitter located inside the omnidirectional reflector and configured to split the collected, concentrated, and reflected one or more incoming beams to first and second portions of the collected, concentrated, and reflected one or more incoming beams;
a first calibration source located on the first dichroic beam splitter and configured to generate one or more first calibration beams;
a first filter configured to filter one or more first beams comprising any of the first portion of the collected, concentrated, and reflected one or more incoming beams and the first calibration beams; and
a first detector configured to detect the filtered one or more first beams.

11. The sensor of claim 10, comprising:
a second calibration source located on the first dichroic beam splitter on an opposite side of the first calibration source, the second calibration source configured to generate one or more second calibration beams;
a second filter configured to filter one or more second beams comprising any of the second portion of the collected, concentrated, and reflected one or more incoming beams and the second calibration beams; and
a second detector configured to detect the filtered one or more second beams.

12. The sensor of claim 10, comprising:
a second calibration source located on the first dichroic beam splitter on an opposite side of the first calibration source, the second calibration source configured to generate one or more second calibration beams; and
a beam splitter configured to:
split the second portion of the collected, concentrated, and reflected one or more incoming beams to a third and fourth portions of the collected, concentrated, and reflected one or more incoming beams; and
split the second calibration beams to a first and second portion of the one or more second calibration beams.

13. The sensor of claim 12, comprising:
a second filter configured to filter one or more second beams comprising any of the third portion of the collected, concentrated, and reflected one or more incoming beams and the first portion of the one or more second calibration beams;
a second detector configured to detect the filtered one or more second beams;
a third filter configured to filter one or more third beams comprising any of the fourth portion of the collected, concentrated, and reflected one or more incoming beams and the second portion of the one or more second calibration beams; and
a third detector configured to detect the filtered one or more third beams.

14. The sensor of claim 12, further comprising:
a first filter or detector holder configured to hold any of the first filter and first detector; and
one or more electrical connectors disposed on the first dichroic beam splitter, the one or more electrical connectors electronically coupled to any of the first and second calibration sources, wherein the one or more electrical connectors are disposed in a shadow of the holder with respect to the collected and concentrated one or more incoming beams.

15. The sensor of claim 10, comprising:
a processing circuitry electronically coupled to the first detector, the processing circuitry configured to process the detected filtered one or more first beams; and
a memory, electronically coupled to the processing circuitry, the memory configured to store a firmware comprising instructions for the processing circuitry to process the detected filtered one or more first beams,
wherein the first detector is configured to detect one or more incoming optical communications beams collected by the omnidirectional reflector from the first and second fields of view, wherein the one or more incoming optical communications beams comprise data for updating the firmware.

## Patentansprüche

1. Sensor, umfassend:
einen omnidirektionalen Reflektor, der eine reflektierende Seite umfasst, die dazu konfiguriert ist:
einen oder mehrere eingehende Strahlen von einem ersten Sichtfeld von 360 Grad und einem zweiten Sichtfeld von 180 Grad oder weniger zu erfassen; und
den/die erfassten einen oder mehreren eingehenden Strahlen unter Verwendung einer Krümmung der reflektierenden Seite zu konzentrieren;
eine Kalibrierungsquelle, die sich innerhalb des omnidirektionalen Reflektors befindet und dazu konfiguriert ist, einen oder mehrere Kalibrierungsstrahlen zu erzeugen;
einen ersten Filter, der dazu konfiguriert ist, einen oder mehrere erste Strahlen zu filtern, die einen von einem ersten Abschnitt des/der erfassten und konzentrierten einen oder mehreren eingehenden Strahlen und einem ersten Abschnitt der Kalibrierungsstrahlen umfassen; und
eine erste Nachweisvorrichtung, die dazu konfiguriert ist, den/die gefilterten einen oder mehreren ersten Strahlen nachzuweisen.

2. Sensor nach Anspruch 1, umfassend:
einen zweiten Filter, der dazu konfiguriert ist, einen oder mehrere zweite Strahlen zu filtern, die einen von einem zweiten Abschnitt des/der erfassten und konzentrierten einen oder mehreren eingehenden Strahlen und einem zweiten Abschnitt der Kalibrierungsstrahlen umfassen;
eine zweite Nachweisvorrichtung, die dazu konfiguriert ist den/die gefilterten einen oder mehreren zweiten Strahlen nachzuweisen; und
einen Strahlteiler, der dazu konfiguriert ist:
den/die erfassten und konzentrierten einen oder mehreren eingehenden Strahlen in erste und zweite Abschnitte des/der erfassten und konzentrierten einen oder mehreren eingehenden Strahlen zu teilen; und
die Kalibrierungsstrahlen in den ersten und den zweiten Abschnitt der Kalibrierungsstrahlen zu teilen,
wobei der Strahlteiler einen oder mehrere von einem Mikroprismenstrahlteiler, einem Plattenstrahlteiler oder einem dichroitischen Strahlteiler umfasst, und der omnidirektionale Reflektor eine Öffnung umfasst, die dazu konfiguriert ist, den einen oder die mehreren Kalibrierungsstrahlen von der Kalibrierungsquelle zu dem Strahlteiler weiterzuleiten.

3. Sensor nach Anspruch 2, umfassend eine Konzentrationslinse, die an der Öffnung des omnidirektionalen Reflektors platziert ist, wobei die Konzentrationslinse dazu konfiguriert ist, den einen oder die mehreren Kalibrierungsstrahlen auf den Strahlteiler zu konzentrieren.

4. Sensor nach Anspruch 1, wobei der eine oder die mehreren Kalibrierungsstrahlen Eigenschaften eines eingehenden Strahls von Interesse umfassen, wobei die Eigenschaften eines von Bandbreite, Amplitude, Intensität, Leistung, Energie umfassen.

5. Sensor, umfassend:
einen omnidirektionalen Reflektor, der eine reflektierende Seite umfasst, die dazu konfiguriert ist:
einen oder mehrere eingehende Strahlen von einem ersten Sichtfeld von 360 Grad und einem zweiten Sichtfeld von 180 Grad oder weniger zu erfassen; und
die erfassten Strahlen unter Verwendung einer Krümmung der reflektierenden Seite zu konzentrieren;
einen ersten dichroitischen Strahlteiler, der sich außerhalb des omnidirektionalen Reflektors befindet und dazu konfiguriert ist, den/die erfassten und konzentrierten einen oder mehreren eingehenden Strahlen in erste und zweite Abschnitte des/der erfassten und konzentrierten einen oder mehreren eingehenden Strahlen zu teilen;
eine erste Kalibrierungsquelle, die sich an dem ersten dichroitischen Strahlteiler befindet und dazu konfiguriert ist, einen oder mehrere erste Kalibrierungsstrahlen zu erzeugen;
einen ersten Filter, der dazu konfiguriert ist, einen oder mehrere erste Strahlen zu filtern, die einen von dem ersten Abschnitt des/der erfassten und konzentrierten einen oder mehreren eingehenden Strahlen und dem einen oder den mehreren Kalibrierungsstrahlen umfassen; und
eine erste Nachweisvorrichtung, die dazu konfiguriert ist, den/die gefilterten einen oder mehreren ersten Strahlen nachzuweisen.

6. Sensor nach Anspruch 5, umfassend:
eine zweite Kalibrierungsquelle, die sich an dem ersten dichroitischen Strahlteiler auf einer gegenüberliegenden Seite der ersten Kalibrierungsquelle befindet, wobei die zweite Kalibrierungsquelle dazu konfiguriert ist, einen oder mehrere zweite Kalibrierungsstrahlen zu erzeugen; und
einen Strahlteiler, der dazu konfiguriert ist:
den zweiten Abschnitt des/der erfassten und konzentrierten einen oder mehreren eingehenden Strahlen in einen dritten und einen vierten Abschnitt des/der erfassten und konzentrierten einen oder mehreren eingehenden Strahlen zu teilen; und
den einen oder die mehreren zweiten Kalibrierungsstrahlen in einen ersten und einen zweiten Abschnitt des einen oder der mehreren zweiten Kalibrierungsstrahlen zu teilen.

7. Sensor nach Anspruch 6, ferner umfassend:
einen zweiten Filter, der dazu konfiguriert ist, einen oder mehrere zweite Strahlen zu filtern, die einen von dem dritten Abschnitt des/der erfassten und konzentrierten einen oder mehreren eingehenden Strahlen und dem ersten Abschnitt des einen oder der mehreren zweiten Kalibrierungsstrahlen umfassen;
eine zweite Nachweisvorrichtung, die dazu konfiguriert ist, den/die gefilterten einen oder mehreren zweiten Strahlen nachzuweisen;
einen dritten Filter, der dazu konfiguriert ist, einen oder mehrere dritte Strahlen zu filtern, die einen von dem vierten Abschnitt des/der erfassten und konzentrierten einen oder mehreren eingehenden Strahlen und dem zweiten Abschnitt des einen oder der mehreren zweiten Kalibrierungsstrahlen umfassen; und
eine dritte Nachweisvorrichtung, die dazu konfiguriert ist, den/die gefilterten einen oder mehreren dritten Strahlen nachzuweisen.

8. Sensor nach Anspruch 6, ferner umfassend:
eine erste Filter- oder Nachweisvorrichtungshalterung, die dazu konfiguriert ist einen von dem ersten Filter und der ersten Nachweisvorrichtung zu halten; und
einen oder mehrere elektrische Verbinder, die an dem ersten dichroitischen Strahlteiler angeordnet sind, wobei der eine oder die mehreren elektrischen Verbinder elektronisch mit einer von der ersten und der zweiten Kalibrierungsquelle gekoppelt sind, wobei der eine oder die mehreren elektrischen Verbinder in einem Schatten der Halterung in Bezug auf den/die erfassten und konzentrierten einen oder mehreren eingehenden Strahlen angeordnet sind.

9. Sensor nach Anspruch 5, umfassend:
eine Verarbeitungsschaltung, die elektronisch mit der ersten Nachweisvorrichtung gekoppelt ist, wobei die Verarbeitungsschaltung dazu konfiguriert ist, den/die nachgewiesenen gefilterten einen oder mehreren ersten Strahlen zu verarbeiten; und
einen Speicher, der elektronisch mit der ersten Verarbeitungsschaltung gekoppelt ist, wobei der Speicher dazu konfiguriert ist, eine Firmware zu speichern, die Anweisungen für die Verarbeitungsschaltung umfasst, den/die nachgewiesenen gefilterten einen oder mehreren ersten Strahlen zu verarbeiten,
wobei die erste Nachweisvorrichtung dazu konfiguriert ist, einen oder mehrere eingehende optischen Kommunikationsstrahlen nachzuweisen, die von dem omnidirektionalen Reflektor aus dem ersten und dem zweiten Sichtfeld erfasst werden, wobei der eine oder die mehreren eingehenden optischen Kommunikationsstrahlen Daten zum Aktualisieren der Firmware umfassen.

10. Sensor, umfassend:
einen omnidirektionalen Reflektor, der eine reflektierende Seite umfasst, die dazu konfiguriert ist:
einen oder mehrere eingehende Strahlen von einem ersten Sichtfeld von 360 Grad und einem zweiten Sichtfeld von 180 Grad oder weniger zu erfassen; und
die erfassten Strahlen unter Verwendung einer Krümmung der reflektierenden Seite zu konzentrieren;
einen Faltreflektor, der dazu konfiguriert ist, den/die erfassten und konzentrierten einen oder mehreren eingehenden Strahlen zu reflektieren;
einen ersten dichroitischen Strahlteiler, der sich innerhalb des omnidirektionalen Reflektors befindet und dazu konfiguriert ist, den/die erfassten, konzentrierten und reflektierten einen oder mehreren eingehenden Strahlen in erste und zweite Abschnitte des/der erfassten, konzentrierten und reflektierten einen oder mehreren eingehenden Strahlen zu teilen;
eine erste Kalibrierungsquelle, die sich an dem ersten dichroitischen Strahlteiler befindet und dazu konfiguriert ist, einen oder mehrere erste Kalibrierungsstrahlen zu erzeugen;
einen ersten Filter, der dazu konfiguriert ist, einen oder mehrere erste Strahlen zu filtern, die einen von dem ersten Abschnitt des/der erfassten, konzentrierten und reflektierten einen oder mehreren eingehenden Strahlen und den ersten Kalibrierungsstrahlen umfassen; und
eine erste Nachweisvorrichtung, die dazu konfiguriert ist, den/die gefilterten einen oder mehreren ersten Strahlen nachzuweisen.

11. Sensor nach Anspruch 10, umfassend:
eine zweite Kalibrierungsquelle, die sich auf dem ersten dichroitischen Strahlteiler auf einer gegenüberliegenden Seite der ersten Kalibrierungsquelle befindet, wobei die zweite Kalibrierungsquelle dazu konfiguriert ist, einen oder mehrere zweite Kalibrierungsstrahlen zu erzeugen;
einen zweiten Filter, der dazu konfiguriert ist, einen oder mehrere zweite Strahlen zu filtern, die einen von dem zweiten Abschnitt des/der erfassten, konzentrierten und reflektierten einen oder mehreren eingehenden Strahlen und der zweiten Kalibrierungsstrahlen umfassen; und
eine zweite Nachweisvorrichtung, die dazu konfiguriert ist, den/die gefilterten einen oder mehreren zweiten Strahlen nachzuweisen.

12. Sensor nach Anspruch 10, umfassend:
eine zweite Kalibrierungsquelle, die sich an dem ersten dichroitischen Strahlteiler auf einer gegenüberliegenden Seite der ersten Kalibrierungsquelle befindet, wobei die zweite Kalibrierungsquelle dazu konfiguriert ist, einen oder mehrere zweite Kalibrierungsstrahlen zu erzeugen; und
einen Strahlteiler, der dazu konfiguriert ist:
den zweiten Abschnitt des/der erfassten, konzentrierten und reflektierten einen oder mehreren eingehenden Strahlen in einen dritten und einen vierten Abschnitt des/der erfassten, konzentrierten und reflektierten einen oder mehreren eingehenden Strahlen zu teilen; und
die zweiten Kalibrierungsstrahlen in einen ersten und einen zweiten Abschnitt des einen oder der mehreren zweiten Kalibrierungsstrahlen zu teilen.

13. Sensor nach Anspruch 12, umfassend:
einen zweiten Filter, der dazu konfiguriert ist, einen oder mehrere zweite Strahlen zu filtern, die einen von dem dritten Abschnitt des/der erfassten, konzentrierten und reflektierten einen oder mehreren eingehenden Strahlen und dem ersten Abschnitt des einen oder der mehreren zweiten Kalibrierungsstrahlen umfassen;
eine zweite Nachweisvorrichtung, die dazu konfiguriert ist, den/die gefilterten einen oder mehreren zweiten Strahlen nachzuweisen;
einen dritten Filter, der dazu konfiguriert ist, einen oder mehrere dritte Strahlen zu filtern, die einen von dem vierten Abschnitt des/der erfassten, konzentrierten und reflektierten einen oder mehreren eingehenden Strahlen und dem zweiten Abschnitt des einen oder der mehreren zweiten Kalibrierungsstrahlen umfassen; und
eine dritte Nachweisvorrichtung, die dazu konfiguriert ist, den/die gefilterten einen oder mehreren dritten Strahlen nachzuweisen.

14. Sensor nach Anspruch 12, ferner umfassend:
eine erste Filter- oder Nachweisvorrichtungshalterung, die dazu konfiguriert ist, eines von dem ersten Filter und der ersten Nachweisvorrichtung zu halten; und
einen oder mehrere elektrische Verbinder, die an dem ersten dichroitischen Strahlteiler angeordnet sind, wobei der eine oder die mehreren elektrischen Verbinder elektronisch mit einer von der ersten und der zweiten Kalibrierungsquelle gekoppelt sind, wobei der eine oder die mehreren elektrischen Verbinder in einem Schatten der Halterung in Bezug auf den/die erfassten und konzentrierten einen oder mehreren eingehenden Strahlen angeordnet sind.

15. Sensor nach Anspruch 10, umfassend:
eine Verarbeitungsschaltung, die elektronisch mit der ersten Nachweisvorrichtung gekoppelt ist, wobei die Verarbeitungsschaltung dazu konfiguriert ist, den/die nachgewiesenen gefilterten einen oder mehreren ersten Strahlen zu verarbeiten; und
einen Speicher, der elektronisch mit der ersten Verarbeitungsschaltung gekoppelt ist, wobei der Speicher dazu konfiguriert ist, eine Firmware zu speichern, die Anweisungen für die Verarbeitungsschaltung umfasst, den/die nachgewiesenen gefilterten einen oder mehreren ersten Strahlen zu verarbeiten,
wobei die erste Nachweisvorrichtung dazu konfiguriert ist, einen oder mehrere eingehende optischen Kommunikationsstrahlen nachzuweisen, die von dem omnidirektionalen Reflektor aus dem ersten und dem zweiten Sichtfeld erfasst werden, wobei der eine oder die mehreren eingehenden optischen Kommunikationsstrahlen Daten zum Aktualisieren der Firmware umfassen.

## Revendications

1. Capteur comprenant :
un réflecteur omnidirectionnel comprenant une face réfléchissante configurée pour :
collecter un ou plusieurs faisceaux entrants provenant d'un premier champ de vision à 360 degrés et d'un deuxième champ de vision à 180 degrés ou moins ; et
concentrer lesdits un ou plusieurs faisceaux entrants collectés en utilisant une courbure de la face réfléchissante ;
une source d'étalonnage située à l'intérieur du réflecteur omnidirectionnel et configurée pour générer un ou plusieurs faisceaux d'étalonnage ;
un premier filtre configuré pour filtrer un ou plusieurs premiers faisceaux comprenant l'une quelconque parmi une première partie desdits un ou plusieurs faisceaux entrants collectés et concentrés et une première partie des faisceaux d'étalonnage ; et
un premier détecteur configuré pour détecter lesdits un ou plusieurs premiers faisceaux filtrés.

2. Capteur de la revendication 1, comprenant :
un deuxième filtre configuré pour filtrer un ou plusieurs deuxièmes faisceaux comprenant l'une quelconque parmi une deuxième partie desdits un ou plusieurs faisceaux entrants collectés et concentrés et une deuxième partie des faisceaux d'étalonnage ;
un deuxième détecteur configuré pour détecter lesdits un ou plusieurs deuxièmes faisceaux filtrés ; et
un séparateur de faisceaux configuré pour :
diviser lesdits un ou plusieurs faisceaux entrants collectés et concentrés en lesdites première et deuxième parties desdits un ou plusieurs faisceaux entrants collectés et concentrés ; et
diviser les faisceaux d'étalonnage en lesdites première et deuxième parties des faisceaux d'étalonnage,
dans lequel le séparateur de faisceaux comprend l'un quelconque parmi un séparateur de faisceaux à micro-prisme, un séparateur de faisceaux à lame plate, ou un séparateur de faisceaux dichroïque, et le réflecteur omnidirectionnel comprend une ouverture configurée pour laisser passer lesdits un ou plusieurs faisceaux d'étalonnage provenant de la source d'étalonnage vers le séparateur de faisceaux.

3. Capteur de la revendication 2, comprenant une lentille de concentration placée à l'ouverture du réflecteur omnidirectionnel, la lentille de concentration étant configurée pour concentrer lesdits un ou plusieurs faisceaux d'étalonnage sur le séparateur de faisceaux.

4. Capteur de la revendication 1, dans lequel lesdits un ou plusieurs faisceaux d'étalonnage comprennent des caractéristiques d'un faisceau entrant d'intérêt, les caractéristiques comprenant l'une quelconque parmi une largeur spectrale, amplitude, intensité, puissance, énergie.

5. Capteur comprenant :
un réflecteur omnidirectionnel comprenant une face réfléchissante configurée pour :
collecter un ou plusieurs faisceaux entrants provenant d'un premier champ de vision à 360 degrés et d'un deuxième champ de vision à 180 degrés ou moins ; et
concentrer les faisceaux collectés en utilisant une courbure de la face réfléchissante ;
un premier séparateur de faisceaux dichroïque situé à l'extérieur du réflecteur omnidirectionnel et configuré pour diviser lesdits un ou plusieurs faisceaux entrants collectés et concentrés en première et deuxième parties desdits un ou plusieurs faisceaux entrants collectés et concentrés ;
une première source d'étalonnage située sur le premier séparateur de faisceaux dichroïque et configurée pour générer un ou plusieurs premiers faisceaux d'étalonnage ;
un premier filtre configuré pour filtrer un ou plusieurs premiers faisceaux comprenant l'une quelconque parmi la première partie desdits un ou plusieurs faisceaux entrants collectés et concentrés et desdits un ou plusieurs premiers faisceaux d'étalonnage ; et
un premier détecteur configuré pour détecter lesdits un ou plusieurs premiers faisceaux filtrés.

6. Capteur de la revendication 5, comprenant :
une deuxième source d'étalonnage située sur le premier séparateur de faisceaux dichroïque sur un côté opposé à la première source d'étalonnage, la deuxième source d'étalonnage étant configurée pour générer un ou plusieurs deuxièmes faisceaux d'étalonnage ; et
un séparateur de faisceaux configuré pour :
diviser la deuxième partie desdits un ou plusieurs faisceaux entrants collectés et concentrés en troisième et quatrième parties desdits un ou plusieurs faisceaux entrants collectés et concentrés ; et
diviser lesdits un ou plusieurs deuxièmes faisceaux d'étalonnage en une première et deuxième partie desdits un ou plusieurs deuxièmes faisceaux d'étalonnage.

7. Capteur de la revendication 6, comprenant en outre :
un deuxième filtre configuré pour filtrer un ou plusieurs deuxièmes faisceaux comprenant l'une quelconque parmi la troisième partie desdits un ou plusieurs faisceaux entrants collectés et concentrés et la première partie desdits un ou plusieurs deuxièmes faisceaux d'étalonnage ;
un deuxième détecteur configuré pour détecter lesdits un ou plusieurs deuxièmes faisceaux filtrés ;
un troisième filtre configuré pour filtrer un ou plusieurs troisièmes faisceaux comprenant l'une quelconque parmi la quatrième partie desdits un ou plusieurs faisceaux entrants collectés et concentrés et la deuxième partie desdits un ou plusieurs deuxièmes faisceaux d'étalonnage ; et
un troisième détecteur configuré pour détecter lesdits un ou plusieurs troisièmes faisceaux filtrés.

8. Capteur de la revendication 6, comprenant en outre :
un support de premier filtre ou détecteur configuré pour maintenir l'un quelconque parmi le premier filtre et le premier détecteur ; et
un ou plusieurs connecteurs électriques disposés sur le premier séparateur de faisceaux dichroïque, lesdits un ou plusieurs connecteurs électriques étant couplés électroniquement à l'une quelconque parmi les première et deuxième sources d'étalonnage, dans lequel lesdits un ou plusieurs connecteurs électriques sont disposés dans une zone d'ombre du support par rapport auxdits un ou plusieurs faisceaux entrants collectés et concentrés.

9. Capteur de la revendication 5, comprenant :
un circuit de traitement couplé électroniquement au premier détecteur, le circuit de traitement étant configuré pour traiter lesdits un ou plusieurs premiers faisceaux filtrés détectés ; et
une mémoire, couplée électroniquement au circuit de traitement, la mémoire étant configurée pour stocker un micrologiciel comprenant des instructions pour le circuit de traitement afin de traiter lesdits un ou plusieurs premiers faisceaux filtrés détectés,
dans lequel le premier détecteur est configuré pour détecter un ou plusieurs faisceaux optiques de communication entrants collectés par le réflecteur omnidirectionnel à partir des premier et deuxième champs de vision, dans lequel lesdits un ou plusieurs faisceaux optiques de communication entrants comprennent des données pour la mise à jour du micrologiciel.

10. Capteur comprenant :
un réflecteur omnidirectionnel comprenant une face réfléchissante configurée pour :
collecter un ou plusieurs faisceaux entrants provenant d'un premier champ de vision à 360 degrés et d'un deuxième champ de vision à 180 degrés ou moins ; et
concentrer les faisceaux collectés en utilisant une courbure de la face réfléchissante ;
un réflecteur de pliage configuré pour réfléchir lesdits un ou plusieurs faisceaux entrants collectés et concentrés ;
un premier séparateur de faisceaux dichroïque situé à l'intérieur du réflecteur omnidirectionnel et configuré pour diviser lesdits un ou plusieurs faisceaux entrants collectés, concentrés et réfléchis en première et deuxième parties desdits un ou plusieurs faisceaux entrants collectés, concentrés et réfléchis ;
une première source d'étalonnage située sur le premier séparateur de faisceaux dichroïque et configurée pour générer un ou plusieurs premiers faisceaux d'étalonnage ;
un premier filtre configuré pour filtrer un ou plusieurs premiers faisceaux comprenant l'une quelconque parmi la première partie desdits un ou plusieurs faisceaux entrants collectés, concentrés et réfléchis et les premiers faisceaux d'étalonnage ; et
un premier détecteur configuré pour détecter lesdits un ou plusieurs premiers faisceaux filtrés.

11. Capteur de la revendication 10, comprenant :
une deuxième source d'étalonnage située sur le premier séparateur de faisceaux dichroïque sur un côté opposé à la première source d'étalonnage, la deuxième source d'étalonnage étant configurée pour générer un ou plusieurs deuxièmes faisceaux d'étalonnage ;
un deuxième filtre configuré pour filtrer un ou plusieurs deuxièmes faisceaux comprenant l'une quelconque parmi la deuxième partie desdits un ou plusieurs faisceaux entrants collectés, concentrés et réfléchis et les deuxièmes faisceaux d'étalonnage ; et
un deuxième détecteur configuré pour détecter lesdits un ou plusieurs deuxièmes faisceaux filtrés.

12. Capteur de la revendication 10, comprenant :
une deuxième source d'étalonnage située sur le premier séparateur de faisceaux dichroïque sur un côté opposé à la première source d'étalonnage, la deuxième source d'étalonnage étant configurée pour générer un ou plusieurs deuxièmes faisceaux d'étalonnage ; et
un séparateur de faisceaux configuré pour :
diviser la deuxième partie desdits un ou plusieurs faisceaux entrants collectés, concentrés et réfléchis en une troisième et quatrième parties desdits un ou plusieurs faisceaux entrants collectés, concentrés et réfléchis ; et
diviser les deuxièmes faisceaux d'étalonnage en une première et deuxième partie desdits un ou plusieurs deuxièmes faisceaux d'étalonnage.

13. Capteur de la revendication 12, comprenant :
un deuxième filtre configuré pour filtrer un ou plusieurs deuxièmes faisceaux comprenant l'une quelconque parmi la troisième partie desdits un ou plusieurs faisceaux entrants collectés, concentrés et réfléchis et la première partie desdits un ou plusieurs deuxièmes faisceaux d'étalonnage ;
un deuxième détecteur configuré pour détecter lesdits un ou plusieurs deuxièmes faisceaux filtrés ;
un troisième filtre configuré pour filtrer un ou plusieurs troisièmes faisceaux comprenant l'une quelconque parmi la quatrième partie desdits un ou plusieurs faisceaux entrants collectés, concentrés et réfléchis et la deuxième partie desdits un ou plusieurs deuxièmes faisceaux d'étalonnage ; et
un troisième détecteur configuré pour détecter lesdits un ou plusieurs troisièmes faisceaux filtrés.

14. Capteur de la revendication 12, comprenant en outre :
un support de premier filtre ou détecteur configuré pour maintenir l'un quelconque parmi le premier filtre et le premier détecteur ; et
un ou plusieurs connecteurs électriques disposés sur le premier séparateur de faisceaux dichroïque, lesdits un ou plusieurs connecteurs électriques étant couplés électroniquement à l'une quelconque parmi les première et deuxième sources d'étalonnage, dans lequel lesdits un ou plusieurs connecteurs électriques sont disposés dans une zone d'ombre du support par rapport auxdits un ou plusieurs faisceaux entrants collectés et concentrés.

15. Capteur de la revendication 10, comprenant :
un circuit de traitement couplé électroniquement au premier détecteur, le circuit de traitement étant configuré pour traiter lesdits un ou plusieurs premiers faisceaux filtrés détectés ; et
une mémoire, couplée électroniquement au circuit de traitement, la mémoire étant configurée pour stocker un micrologiciel comprenant des instructions pour le circuit de traitement afin de traiter lesdits un ou plusieurs premiers faisceaux filtrés détectés,
dans lequel le premier détecteur est configuré pour détecter un ou plusieurs faisceaux optiques de communication entrants collectés par le réflecteur omnidirectionnel à partir des premier et deuxième champs de vision, dans lequel lesdits un ou plusieurs faisceaux optiques de communication entrants comprennent des données pour la mise à jour du micrologiciel.
